# EUROPEAN PATENT APPLICATION

(11) **EP 4 723 527 A1**
(43) Date of publication of application: **08.04.2026**
(21) Application number: 24204825.4
(22) Date of filing: 04.10.2024
(51) Int. Cl.: H04L 5/00, H04L 1/00

(54) **EVENT-BASED CHANNEL STATE INFORMATION IN PUSCH**

(71) Applicant: Nokia Technologies Oy, 02610 Espoo (FI)
(72) Inventor: Hakola, Sami-Jukka, 90450 Kempele (FI); Karjalainen, Juha Pekka, 88600 Sotkamo (FI); Koskela, Timo, 90670 Oulu (FI); Youngsoo, Yuk, 06275 Gangnamgu (KR)
(74) Representative: Cohausz & Florack

(57) **Abstract**

The disclosure inter alia relates to a user equipment comprising means for performing at least the following:
- determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
- determining a number of time resource units in which a demodulation reference signal, DMRS, is transmitted within the section of the resource grid;
- allocating, based on the number of time resource units in which a DMRS is transmitted, at least one resource element of the section of the resource grid to the event-based CSI report.

## Description

### TECHNOLOGICAL FIELD

The present disclosure is related to, but not limited to, reporting design in the context of radio access networks (RANs) as defined by the 3rd Generation Partnership Project (3GPP) standards, such as the 5G standard also referred to as New Radio (NR) or the 6G standard. In particular, the disclosure pertains to the transmission of event-based channel state information (CSI) reports together with non-event-based CSI reports on a physical uplink shared channel (PUSCH).

### BACKGROUND

Even though the present disclosure is not limited to the 5G standard, and may also relate to future 3GPP standards such as 6G etc., the following exemplifications use 5G as a reference, which is to be understood as a non-limiting example, though.

According to the present 5G standard, a user equipment (UE) may be connected to a network, for example by means of a radio access node such as a gNodeB (gNB), and the network may configure the UE to perform frequent periodic beam reporting or semi-persistent beam reporting - e.g. the N best beams and corresponding physical layer (L 1) reference signal received powers (RSRP) - or trigger frequent aperiodic beam reporting to timely acquire the best or preferred beam for data or control transmissions. However, this may result in large uplink (UL) reporting overhead and control signalling overhead. At the same time, if less frequent beam reporting is configured, the network may not always be able to acquire the best or preferred beam(s), since the beam reporting by the UE may be outdated, thus leading to performance degradation. Given that the UE may have better and more present knowledge of beam quality changes, UE-initiated beam reporting procedure can lead to more timely beam reports yet with reduced reporting overhead. Under such a procedure, if the UE determines that for example current beam(s) quality becomes poor, the UE can trigger beam reporting without the network needing to configure or trigger frequent reporting. This concept may generally be referred to as event-based beam reporting, and more generally to event-based CSI reporting.

Furthermore, according to the present 5G standard, encoded hybrid automatic repeat request acknowledgement (HARQ-ACK), encoded CSI part 1, and encoded CSI part 2 may be multiplexed to form a codeword with the steps outlined in section 6.2.7 of TS 38.212. The uplink control information (UCI) may be transmitted in only the orthogonal frequency-division multiplexing (OFDM) symbols that are unused for demodulation reference signal (DMRS) transmission. In any OFDM symbol used for UCI transmission for a UCI type, the mapping of that UCI type may depend on the number of resource elements (RE) available for UCI transmission and the remaining REs required for that UCI type. If the number of remaining REs required for that UCI type in an OFDM symbol is greater than half of the available REs for the UCI transmission, the mapping of the UCI type may be contiguous. Otherwise, the mapping may be uniformly distributed across available REs in an OFDM symbol to achieve the diversity gain. The number of coded bits that are occupied in an RE for UCI or data transmission may be equal to the product of the modulation order and the number of layers. The coded HARQ-ACK bits may be placed from the OFDM symbol, after the first consecutive DMRS OFDM symbols. The coded CSI part 1 or part 2 bits may be placed at the starting OFDM symbol that is unused for DMRS in the shared channel symbol allocation. The multiplexing operation may depend on the number of HARQ-ACK bits. When the number of HARQ-ACK bits is less than or equal to 2, the coded HARQ-ACK bits may be punctured. Otherwise, the coded HARQ-ACK bits may be rate-matched.

Multiplexing may currently involve the following processing steps: Step 1: When the number of HARQ-ACK bits is less than or equal to 2, find the reserved HARQ-ACK locations. Step 2: When the number of HARQ-ACK bits is greater than 2, map the coded HARQ-ACK bits (if any). Step 3: Map the coded CSI part 1 and CSI part 2 bits (if any). Step 4: Map the coded UL-SCH bits (if any). Step 5: When the number of HARQ-ACK bits is less than or equal to 2, map the coded HARQ-ACK bits (if any). Step 6: Form the codeword.

### SUMMARY OF SOME EXEMPLARY EMBODIMENTS

However, there is a problem that according to the present 5G standard, transmission of an event-based CSI report together with a non-event-based CSI report, such as a periodic or aperiodic CSI report configured by the network, has not been specified. In particular, it is presently not defined how resources for an event-based CSI report are mapped such that a single PUSCH transmission can carry both the event-based CSI report and a non-event-based CSI report.

In view of the above, example embodiments of the present disclosure may have inter alia the effect of enabling transmission of an event-based CSI report together with a non-event-based CSI report. In particular, example embodiments of the present disclosure may provide or define a resource allocation such that an event-based CSI report can be transmitted together with a non-event-based CSI report.

According to a first exemplary aspect, a user equipment is disclosed. The user equipment may comprise at least one processor and at least one memory. The at least one memory may store instructions that, when executed by the at least one processor, cause the user equipment to perform at least the following:
- determining that both an event-based channel state information (CSI) report and a non-event-based CSI report are to be transmitted on a physical uplink shared channel (PUSCH) within a same section of a resource grid, wherein the section of the resource grid is defined by a first plurality of consecutive time resource units and by a second plurality of consecutive frequency resource units;
- allocating at least one resource element of the section of the resource grid to the event-based CSI report.

As used herein, a user equipment may be understood as a stationary device or a mobile device. In particular, the user equipment may be a mobile device, such as a smartphone, a tablet, a wearable, a smartwatch, a low power device, an IoT device, an IIoT device, a vehicle, a truck, a drone, an airplane, or the like. The user equipment may in particular be capable of communicating with (transmitting and receiving signals and/or data to/from) one or more other user equipment. Additionally or alternatively, the user equipment may in particular be capable of communicating with (transmitting and receiving signals and/or data to/from) at least one radio access node of a radio access network. Generally, the user equipment may also be any device enabled for communication with a communication network and/or another user equipment.

As used herein, a radio access node may be understood as a network node used for providing radio access to one or more UEs. As an example, the radio access node may be a wireless communication station installed at a fixed or mobile location and may in particular be or comprise an entity of a radio access network of a wireless communication system. For instance, the radio access node may be, comprise, or be part of a base station (BS) of a wireless communication network of any generation (e.g. a gNB, ng-eNB, eNodeB, NodeB, BTS or the like) of a 3GPP standard. Generally, the radio access node may be or comprise a hardware or software component implementing a certain functionality. In an example, the radio access node may be a location management function (LMF). In an example, the radio access node may be an entity as defined by 3GPP 5G or NR standard (also referred to as gNB). In another example, the radio access node may be an entity as defined by successors of the present 3GPP standards, such as 6G. Accordingly, while the radio access node may be understood to be implemented in or be a single device or module, the radio access node may also be implemented across or comprise multiple devices or modules. As such, the radio access node may in particular be implemented in or be a stationary device. Multiple radio access nodes may in particular establish a wireless communication system or network, which may in particular be a 5G or 6G system or any other wireless communications system defined by a past or future standard, in particular successors of the present 3GPP standards. The radio access node may be capable of being in direct and/or indirect communication with other radio access nodes or with an apparatus such as a user equipment. Furthermore, the radio access node may be associated with a respective cell, be associated with a respective physical cell identifier (PCI), and/or be associated with a respective transmission and reception point (TRP).

As used herein, channel state information (CSI) may be understood as any kind of information which is indicative of a state of a channel. For example, the CSI may comprise information indicative of a channel quality, such as a channel quality indicator (CQI). For example, the CSI may comprise information indicative of precoding matrix, such as a precoding matrix indicator (PMI). For example, the CSI may comprise information indicative of a rank, such as a rank indicator (RI). For example, the CSI may be included in an uplink control information (UCI) message multiplexed on a physical uplink shared channel (PUSCH). For example, the CSI may be event-based or non-event-based. For example, the non-event-based CSI may comprise a first part and a second part. For example, the second part may be referred to as CSI part 1. For example, the second part may be referred to as CSI part 2.

As used herein, a CSI report may be understood as an act of transmitting CSI from a UE to a radio access node. For example, the CSI report may be transmitted from a UE to a radio access node on a PUSCH.

As used herein, an event-based CSI (ECSI) report may be understood as a CSI report which is triggered by the occurrence of an event. For example, the event may be a predefined event. For example, the occurrence of the event may be determined by a UE. For example, the event-based CSI report may be initiated by a UE in response to determining that the event has occurred. For example, the event may be a change in channel quality. For example, the event may be a channel quality indicator (CQI) falling below a predefined threshold or rising above a predefined threshold. For example, the event may be a change in signal-to-interference-plus-noise ratio (SINR). For example, the event may be the SINR falling below a predefined threshold or rising above a predefined threshold. For example, the event-based CSI report may relate to beam reporting. For example, the event-based CSI report may be initiated by a UE in response to determining that a quality of one or more current beams becomes poor or high, e.g. falls below a predefined threshold or rises above a predefined threshold.

As used herein, a non-event-based CSI report may be understood as a CSI report which is configured by a network to which a UE is connected. For example, the non-event-based CSI report may be scheduled by the network. For example, the non-event-based CSI report may be a periodic CSI report. For example, the periodic CSI report may be transmitted at regular intervals, regardless of channel conditions. For example, the non-event-based CSI report may be an aperiodic CSI report. For example, the aperiodic CSI report may be, e.g. explicitly, requested by a radio access node at irregular intervals, i.e. on-demand.

As used herein, a resource grid may be understood as a two-dimensional representation of radio resources available for a transmission, such as a PUSCH transmission, wherein a first dimension is represented by a time domain and a second dimension is represented by a frequency domain. For example, the time domain may be divided into time resource units, such as radio frames, subframes, slots, or orthogonal frequency-division multiplexing (OFDM) symbols. In this context, a radio frame may for example be understood as a time resource unit comprising, e.g. consisting of, ten subframes. For example, a radio frame may correspond to a duration of 10 ms in the time domain. For example, a subframe may be understood as a time resource unit comprising, e.g. consisting of, N slots, where N is a power of two. For example, a slot may be understood as a time resource unit comprising, e.g. consisting of, 12 or 14 OFDM symbols. For example, an OFDM symbol may be or correspond to a smallest resource unit in the time domain. For example, the frequency domain may be divided into frequency resource units, such as resource blocks or subcarriers. In this context, a resource block may for example be understood as a frequency resource unit comprising, e.g. consisting of, 12 subcarriers. For example, a subcarrier may be or correspond to a smallest resource unit in the frequency domain.

As used herein, a plurality of consecutive time resource units may be understood as a group of time resource units which are directly adjacent in the time domain. For example, in a case in which the plurality of consecutive time resource units is or corresponds to a slot, the consecutive time resource units may be 12 or 14 directly adjacent OFDM symbols.

As used herein, a plurality of consecutive frequency resource units may be understood as a group of frequency resource units which are directly adjacent in the frequency domain. For example, in a case in which the plurality of consecutive frequency resource units is or corresponds to a resource block, the consecutive frequency resource units may be 12 directly adjacent subcarriers.

As used herein, a section of a resource grid may be understood as a part of a resource grid defined by a first plurality of consecutive time resource units and by a second plurality of consecutive frequency resource units. For example, in a case in which the section of the resource grid spans 14 consecutive OFDM symbols in the time domain and 12 consecutive subcarriers in the frequency domain, the section of the resource grid may comprise 168 resource elements (RE).

As used herein, a resource element (RE) may be understood as a smallest unit of a resource grid, which represents one OFDM symbol in the time domain and one subcarrier in the frequency domain.

According to the first exemplary aspect, the user equipment may determine that both an event-based CSI report and a non-event-based CSI report are to be transmitted on a PUSCH within a same section of a resource grid, wherein the section of the resource grid is defined by a first plurality of consecutive time resource units and by a second plurality of consecutive frequency resource units. For example, determining that both an event-based CSI report and a non-event-based CSI report are to be transmitted on a PUSCH within a same section of a resource grid may be performed if it has been determined that an event has occurred, wherein the event triggers an event-based CSI report. For example, determining that both an event-based CSI report and a non-event-based CSI report are to be transmitted on a PUSCH within a same section of a resource grid may be performed by the UE in response to determining that an event has occurred, wherein the event triggers an event-based CSI report.

Furthermore, according to the first exemplary aspect, the user equipment may allocate at least one resource element of the section of the resource grid to the event-based CSI report. For example, allocating at least one resource element of the section of the resource grid to the event-based CSI report may be based on at least one of resources for a first part of a non-event-based CSI report or resources for a second part of a non-event-based CSI report. For example, allocating at least one resource element of the section of the resource grid to the event-based CSI report may be based on resource elements which are to be allocated to CSI part 1, and/or based on resource elements which are to be allocated to CSI part 2. For example, allocating at least one resource element of the section of the resource grid to the event-based CSI report may be based on resource elements which have already been allocated to CSI part 1, and/or based on resource elements which have already been allocated to CSI part 2. For example, allocating at least one resource element of the section of the resource grid to the event-based CSI report may be based on resources for a HARQ transmission. For example, allocating at least one resource element of the section of the resource grid to the event-based CSI report may be based on resource elements which are to be allocated to the HARQ transmission. For example, allocating at least one resource element of the section of the resource grid to the event-based CSI report may be based on resource elements which have already been allocated to the HARQ transmission. For example, allocating at least one resource element of the section of the resource grid to the event-based CSI report may be based on a configuration received from the network. For example, allocating at least one resource element of the section of the resource grid to the event-based CSI report may be based on radio resource control (RRC) configuration. For example, allocating at least one resource element of the section of the resource grid to the event-based CSI report may be based on random access configuration. For example, allocating at least one resource element of the section of the resource grid to the event-based CSI report may be based on configuration information indicative of the allocation of the event-based CSI report.

By the user equipment determining that both an event-based CSI report and a non-event-based CSI report are to be transmitted on a PUSCH within a same section of a resource grid, and allocating at least one resource element of the section of the resource grid to the event-based CSI report, it can be achieved that an event-based CSI report can be transmitted together with a non-event-based CSI report. In particular, a resource allocation allowing the event-based CSI report and the non-event-based CSI report to be included within the same UCI message, e.g. multiplexed on PUSCH, can be achieved.

In example embodiments of the first exemplary aspect, allocating the at least one resource element of the section of the resource grid to the event-based CSI report may be performed according to a fixed or predefined scheme. For example, the fixed scheme may be a fixed scheme which does not take into account a number of time resource units which include a demodulation reference signal (DMRS) transmission. In other words, the fixed scheme may be independent of a number of time resource units which include a DMRS transmission. For example, the fixed scheme may define fixed positions to which one or more of the at least one resource element is, e.g. always, allocated. For example, the fixed scheme may define fixed relative positions to which one or more of the at least one resource element is, e.g. always, allocated.

In example embodiments of the first exemplary aspect, the at least one memory may further store instructions that, when executed by the at least one processor, cause the user equipment to perform the following:
- allocating at least one resource element of the section of the resource grid to a first part of the non-event-based CSI report.

Thereby, it can be achieved that resource elements are also allocated to the first part of the non-event-based CSI report, e.g. in a case in which resource elements for the first part have not yet been allocated before.

In example embodiments of the first exemplary aspect, the at least one memory may further store instructions that, when executed by the at least one processor, cause the user equipment to perform the following:
- allocating at least one resource element of the section of the resource grid to a second part of the non-event-based CSI report.

Thereby, it can be achieved that resource elements are also allocated to the second part of the non-event-based CSI report, e.g. in a case in which resource elements for the second part have not yet been allocated before.

In example embodiments of the first exemplary aspect, the at least one memory may further store instructions that, when executed by the at least one processor, cause the user equipment to perform the following:
- allocating at least one resource element of the section of the resource grid to a hybrid automatic repeat request (HARQ) transmission.

As used herein, a HARQ transmission may be understood as any transmission of information related to HARQ. For example, the HARQ transmission may comprise a hybrid automatic repeat request acknowledgment (HARQ-ACK). For example, resource elements of the resource grid may be allocated to HARQ-ACK. Alternatively or additionally, resource elements of the resource grid may be allocated as reserved for HARQ-ACK. By the UE allocating at least one resource element of the section of the resource grid to a HARQ transmission, it can be achieved that resource elements are also allocated to the HARQ transmission, e.g. in a case in which resource elements for the HARQ transmission have not yet been allocated before.

In example embodiments of the first exemplary aspect, the at least one memory may further store instructions that, when executed by the at least one processor, cause the user equipment to perform the following:
- allocating at least one resource element of the section of the resource grid to user data.

Thereby, it can be achieved that resource elements are also allocated to user data, e.g. for being transmitted on PUSCH. For example, the user data may be or comprise uplink shared channel (UL-SCH) data, such as PUSCH data.

As used herein, an order of resource elements of a section of a resource grid may be understood as a linear sequence of the resource elements, obtained by a respective definition. For example, the order of resource elements may be defined as follows: Let the section of the resource grid be subdivided into m time resource units in the time domain, and let i = 0 ... m-1 denote a respective time resource unit index. Furthermore, let the section of the resource grid be subdivided into n frequency resource units in the frequency domain, and let j = 0 ... n-1 denote a respective frequency resource unit index. Each resource element of the section of the resource grid may then be, e.g. uniquely, identified by i and j, for example as RE_{i,j}. The order of resource elements may then be defined such that an RE with smaller i is arranged in front of an RE with larger i, wherein in the case of identical i, an RE with smaller j is arranged in front of an RE with larger j. In other words, the order may be defined as follows: RE_{0,0}, RE_{0,1}, RE_{0,2}, ..., RE_{0,n-1}, RE_{1,0}, RE_{1,1}, ..., RE_{1,n-1}, RE_{2,0}, RE_{2,1}, ..., RE_{2,n-1}, ..., RE_{m-1,0}, RE_{m-1,1}, RE_{m-1,2}, ..., RE_{m-1,n-1}. For example, in a case in which the section of the resource grid spans 14 consecutive OFDM symbols in the time domain and 12 consecutive subcarriers in the frequency domain, i may denote an OFDM symbol index and j may denote a subcarrier index, and the order of resource elements may be defined as follows: RE_{0,0}, RE_{0,1}, RE_{0,2}, ..., RE_{0,11}, RE_{1,0}, RE_{1,1}, ..., RE_{1,11}, RE_{2,0}, RE_{2,1}, ... , RE_{2,11}, ... , RE_{13,0}, RE_{13,1}, RE_{13,2}, ... , RE_{13,11}.

As used herein, at least one resource element of a first type at least partially succeeding at least one resource element of a second type with respect to an order of resource elements may be understood such that the last resource element, with respect to the order of resource elements, of the at least one resource element of the first type succeeds, with respect to the order of resource elements, the last resource element, with respect to the order of resource elements, of the at least one resource element of the second type. More specifically, four cases (1) to (4) can be distinguished: (1) If the at least one resource element of the first type comprises only one resource element - which is then also the last resource element of the at least one resource element of the first type - and the at least one resource element of the second type comprises only one resource element - which is then also the last resource element of the at least one resource element of the second type - the resource element of the first type succeeds the resource element of the second type with respect to the order of resource elements. In other words, the resource element of the first type is arranged behind the resource element of the second type with respect to the order of resource elements. (2) If the at least one resource element of the first type comprises a plurality of resource elements and the at least one resource element of the second type comprises only one resource element, the last resource element, with respect to the order of resource elements, of the plurality of resource elements of the first type succeeds the resource element of the second type. In other words, the last resource element of the plurality of resource elements of the first type is arranged behind the resource element of the second type. (3) If the at least one resource element of the first type comprises only one resource element and the at least one resource element of the second type comprises a plurality of resource elements, the resource element of the first type succeeds the last resource element, with respect to the order of resource elements, of the plurality of resource elements of the second type. In other words, the resource element of the first type is arranged behind the last resource element of the plurality of resource elements of the second type. (4) If the at least one resource element of the first type comprises a plurality of resource elements and the at least one resource element of the second type comprises a plurality of resource elements, the last resource element, with respect to the order of resource elements, of the plurality of resource elements of the first type succeeds the last resource element, with respect to the order of resource elements, of the plurality of resource elements of the second type. In other words, the last resource element of the plurality of resource elements of the first type is arranged behind the last resource element of the plurality of resource elements of the second type.

As used herein, a succession of a resource element with respect to another resource element may be understood such that both a direct succession, i.e. a situation in which there are no further resource elements in between, and an indirect succession, i.e. a situation in which there are further resource elements in between, are covered.

As used herein, at least one resource element of a first type at least partially preceding at least one resource element of a second type with respect to an order of resource elements may be understood such that the last resource element, with respect to the order of resource elements, of the at least one resource element of the first type precedes, with respect to the order of resource elements, the last resource element, with respect to the order of resource elements, of the at least one resource element of the second type. More specifically, four cases (1) to (4) can be distinguished: (1) If the at least one resource element of the first type comprises only one resource element - which is then also the last resource element of the at least one resource element of the first type - and the at least one resource element of the second type comprises only one resource element - which is then also the last resource element of the at least one resource element of the second type - the resource element of the first type precedes the resource element of the second type with respect to the order of resource elements. In other words, the resource element of the first type is arranged in front of the resource element of the second type with respect to the order of resource elements. (2) If the at least one resource element of the first type comprises a plurality of resource elements and the at least one resource element of the second type comprises only one resource element, the last resource element, with respect to the order of resource elements, of the plurality of resource elements of the first type precedes the resource element of the second type. In other words, the last resource element of the plurality of resource elements of the first type is arranged in front of the resource element of the second type. (3) If the at least one resource element of the first type comprises only one resource element and the at least one resource element of the second type comprises a plurality of resource elements, the resource element of the first type precedes the last resource element, with respect to the order of resource elements, of the plurality of resource elements of the second type. In other words, the resource element of the first type is arranged in front of the last resource element of the plurality of resource elements of the second type. (4) If the at least one resource element of the first type comprises a plurality of resource elements and the at least one resource element of the second type comprises a plurality of resource elements, the last resource element, with respect to the order of resource elements, of the plurality of resource elements of the first type precedes the last resource element, with respect to the order of resource elements, of the plurality of resource elements of the second type. In other words, the last resource element of the plurality of resource elements of the first type is arranged in front of the last resource element of the plurality of resource elements of the second type.

As used herein, a precedence of a resource element with respect to another resource element may be understood such that both a direct precedence, i.e. a situation in which there are no further resource elements in between, and an indirect precedence, i.e. a situation in which there are further resource elements in between, are covered.

As used herein, at least one resource element of a first type at least partially alternating with at least one resource element of a second type with respect to an order of resource elements may be understood as at least one occurrence of a situation in which either (i) a resource element of the at least one resource element of the first type is directly followed by exactly one resource element of the at least one resource element of the second type, which is in turn directly followed by a resource element of the at least one resource element of the first type, or - vice versa - (ii) a resource element of the at least one resource element of the second type is directly followed by exactly one resource element of the at least one resource element of the first type, which is in turn directly followed by a resource element of the at least one resource element of the second type. This may imply that either the at least one resource element of the first type or the at least one resource element of the second type or both comprises more than one resource element. In this context, a direct following of a resource element with respect to another resource element may be understood such that there are no further resource elements in between.

In example embodiments of the first exemplary aspect, allocating the at least one resource element may be performed such that the at least one resource element allocated to the event-based CSI report at least partially succeeds, with respect to an order of resource elements of the section of the resource grid, at least one resource element allocated to the first part of the non-event-based CSI report. Thereby, it can be achieved that the first part of the non-event-based CSI report is transmitted before the event-based CSI report.

In example embodiments of the first exemplary aspect, allocating the at least one resource element may be performed such that the at least one resource element allocated to the event-based CSI report at least partially alternates, with respect to an order of resource elements of the section of the resource grid, with at least one resource element allocated to a HARQ transmission. In other words, the at least one resource element allocated to the event-based CSI report may be punctured by the at least one resource element allocated to the HARQ transmission. Thereby, it can be achieved that higher performance for HARQ feedback is ensured.

In example embodiments of the first exemplary aspect, allocating the at least one resource element may be performed such that the at least one resource element allocated to the event-based CSI report at least partially precedes, with respect to an order of resource elements of the section of the resource grid, at least one resource element allocated to the second part of the non-event-based CSI report. Thereby, it can be achieved that the event-based CSI report is transmitted before the second part of the non-event-based CSI report.

In example embodiments of the first exemplary aspect, allocating the at least one resource element may be performed such that the at least one resource element allocated to the event-based CSI report at least partially succeeds, with respect to an order of resource elements of the section of the resource grid, at least one resource element allocated to the second part of the non-event-based CSI report. Thereby, it can be achieved that the second part of the non-event-based CSI report is transmitted before the event-based CSI report.

In example embodiments of the first exemplary aspect, allocating the at least one resource element may be performed such that the at least one resource element allocated to the second part of the non-event-based CSI report at least partially alternates, with respect to an order of resource elements of the section of the resource grid, with at least one resource element allocated to a HARQ transmission. In other words, the at least one resource element allocated to the second part of the non-event-based CSI report may be punctured by the at least one resource element allocated to the HARQ transmission. Thereby, it can be achieved that higher performance for HARQ feedback is ensured.

In example embodiments of the first exemplary aspect, allocating the at least one resource element may be performed such that the at least one resource element allocated to the event-based CSI report at least partially alternates, with respect to an order of resource elements of the section of the resource grid, with the at least one resource element allocated to the second part of the non-event-based CSI report. In other words, the at least one resource element allocated to the event-based CSI report and the at least one resource element allocated to the second part of the non-event-based CSI report may be interleaved. Thereby, it can be achieved that the event-based CSI report and the second part of the non-event-based CSI report are transmitted simultaneously or at least approximately simultaneously.

In example embodiments of the first exemplary aspect, the at least one memory may further store instructions that, when executed by the at least one processor, cause the user equipment to perform the following:
- receiving configuration information from a radio access node.

Thereby, it can be achieved that the UE is configured by the network to perform a method according to the first aspect.

In example embodiments of the first exemplary aspect, the at least one memory may further store instructions that, when executed by the at least one processor, cause the user equipment to perform the following:
- determining that an event has occurred, wherein the event triggers an event-based CSI report.

For example, the event may be a change in channel quality. For example, the event may be a channel quality indicator (CQI) falling below a predefined threshold or rising above a predefined threshold. For example, the event may be a change in signal-to-interference-plus-noise ratio (SINR). For example, the event may be the SINR falling below a predefined threshold or rising above a predefined threshold. For example, the event may be a change in beam quality. For example, the event may be the quality of one or more current beams falling below a predefined threshold or rising above a predefined threshold.

In example embodiments of the first exemplary aspect, the at least one memory may further store instructions that, when executed by the at least one processor, cause the user equipment to perform the following:
- transmitting an uplink resource request to the radio access node.

For example, transmitting an uplink resource request to a radio access node may comprise transmitting an uplink resource request for an event-based CSI report. For example, transmitting an uplink resource request may be performed on a physical uplink control channel (PUCCH).

In example embodiments of the first exemplary aspect, the at least one memory may further store instructions that, when executed by the at least one processor, cause the user equipment to perform the following:
- receiving uplink grant information from the radio access node.

For example, receiving uplink grant information my comprise receiving an uplink (UL) grant for PUSCH to transmit a CSI report, such as an event-based CSI report and/or a non-event-based CSI report.

In example embodiments of the first exemplary aspect, the at least one memory may further store instructions that, when executed by the at least one processor, cause the user equipment to perform the following:
- transmitting the event-based CSI report together with the non-event-based CSI report on the PUSCH. For example, the UE may transmit PUSCH carrying both the non-event-based and the event-based CSI report.

According to the first exemplary aspect, a respective method is disclosed, too. The method according to the first exemplary aspect may be performed by a user equipment. The method may comprise at least the following:
- determining that both an event-based channel state information (CSI) report and a non-event-based CSI report are to be transmitted on a physical uplink shared channel (PUSCH) within a same section of a resource grid, wherein the section of the resource grid is defined by a first plurality of consecutive time resource units and by a second plurality of consecutive frequency resource units;
- allocating at least one resource element of the section of the resource grid to the event-based CSI report.

Within the first exemplary aspect, the disclosure of any instruction that, when executed by the at least one processor of the user equipment, causes the user equipment to perform an action shall also be considered as a disclosure of a respective action of the method. Furthermore, the disclosure of any example or example embodiment of the user equipment shall also be considered as a respective example or example embodiment of the method.

According to the first exemplary aspect, a respective apparatus comprising means for performing a method according to the first exemplary aspect is disclosed, too. The apparatus may be a user equipment. Within the first exemplary aspect, the disclosure of any method action shall also be considered as a disclosure of means for performing the respective method action. Likewise, the disclosure of any means for performing a method action shall also be considered as a disclosure of the method action itself.

The means or functionality of the apparatus according to the first exemplary aspect can be implemented in hardware and/or software. They may comprise one or multiple modules or units providing the respective functionality. They may for instance comprise at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to the first exemplary aspect, a respective computer-readable medium is disclosed, too. The computer-readable medium may be non-transitory. The computer-readable medium according to the first exemplary aspect may comprise program instructions that, when executed by a user equipment, cause the user equipment to perform at least a method according to the first exemplary aspect.

The computer-readable medium according to the first exemplary aspect could for example be a disk or a memory or the like. The program instructions could be stored in the computer-readable medium in the form of instructions encoding the computer-readable medium. The computer-readable medium may be intended for taking part in the operation of a device, like an internal or external memory, for instance a read-only memory (ROM) or hard disk of a computer, or be intended for distribution of the program, like an optical disc.

According to the first exemplary aspect, a respective computer program is disclosed, too. The computer program according to the first exemplary aspect may comprise instructions which, when executed by a user equipment, cause the user equipment to at least perform a method according to the first exemplary aspect.

The computer program according to the first exemplary aspect may be stored on a computer-readable storage medium, in particular a tangible and/or non-transitory computer-readable storage medium. In particular, the computer program according to the first exemplary aspect may be stored on a non-transitory computer-readable medium according to the first exemplary aspect.

According to a second exemplary aspect, a user equipment is disclosed. The user equipment may comprise at least one processor and at least one memory. The at least one memory may store instructions that, when executed by the at least one processor, cause the user equipment to perform at least the following:
- determining that both an event-based channel state information (CSI) report and a non-event-based CSI report are to be transmitted on a physical uplink shared channel (PUSCH) within a same section of a resource grid, wherein the section of the resource grid is defined by a first plurality of consecutive time resource units and by a second plurality of consecutive frequency resource units;
- determining a number of time resource units in which a demodulation reference signal (DMRS) is transmitted within the section of the resource grid;
- allocating, based on the number of time resource units in which a DMRS is transmitted, at least one resource element of the section of the resource grid to the event-based CSI report.

As used herein, a time resource unit in which a demodulation reference signal (DMRS) is transmitted within a section of a resource grid may be understood as a time resource unit which includes a DMRS transmission in at least one frequency resource unit within the section of the resource grid. For example, the time resource unit may be or correspond to an OFDM symbol, and within the OFDM symbol, a DMRS may be transmitted in at least one subcarrier within a section of a resource grid, the section defined by 14 consecutive OFDM symbols and 12 consecutive subcarriers. In other words, the time resource unit may be or correspond to an OFDM symbol comprising 12 resource elements associated to 12 subcarriers within the section of the resource grid, and a DMRS may be transmitted in at least one of these 12 resource elements.

According to the second exemplary aspect, the user equipment may determine that both an event-based CSI report and a non-event-based CSI report are to be transmitted on a PUSCH within a same section of a resource grid, wherein the section of the resource grid is defined by a first plurality of consecutive time resource units and by a second plurality of consecutive frequency resource units. In this respect, reference is made to the first exemplary aspect.

Furthermore, according to the second exemplary aspect, the user equipment may determine a number of time resource units in which a demodulation reference signal (DMRS) is transmitted within the section of the resource grid. Thereby, it can be achieved that the number of time resource units in which a DMRS is transmitted within the section of the resource grid is obtained by the UE.

Furthermore, according to the second exemplary aspect, the user equipment may allocate, based on the number of time resource units in which a DMRS is transmitted, at least one resource element of the section of the resource grid to the event-based CSI report. In this context, allocating the at least one resource element based on the number of time resource units in which a DMRS is transmitted may be understood such that performing the allocation depends on the number of time resource units in which a DMRS is transmitted. For example, the allocation may be performed in a first way if the number of time resource units in which a DMRS is transmitted is equal to one, in a second different way if the number of time resource units in which a DMRS is transmitted is greater than one, and in a third different way if the number of time resource units in which a DMRS is transmitted is greater than two. Apart from this, allocating at least one resource element of the section of the resource grid to the event-based CSI report may, for example, be based on other factors. For example allocating at least one resource element of the section of the resource grid to the event-based CSI report may be based on at least one of resources for a first part of a non-event-based CSI report or resources for a second part of a non-event-based CSI report. For example, allocating at least one resource element of the section of the resource grid to the event-based CSI report may be based on resource elements which are to be allocated to CSI part 1, and/or based on resource elements which are to be allocated to CSI part 2. For example, allocating at least one resource element of the section of the resource grid to the event-based CSI report may be based on resource elements which have already been allocated to CSI part 1, and/or based on resource elements which have already been allocated to CSI part 2. For example, allocating at least one resource element of the section of the resource grid to the event-based CSI report may be based on resources for a HARQ transmission. For example, allocating at least one resource element of the section of the resource grid to the event-based CSI report may be based on resource elements which are to be allocated to the HARQ transmission. For example, allocating at least one resource element of the section of the resource grid to the event-based CSI report may be based on resource elements which have already been allocated to the HARQ transmission. For example, allocating at least one resource element of the section of the resource grid to the event-based CSI report may be based on a configuration received from the network. For example, allocating at least one resource element of the section of the resource grid to the event-based CSI report may be based on radio resource control (RRC) configuration. For example, allocating at least one resource element of the section of the resource grid to the event-based CSI report may be based on random access configuration. For example, allocating at least one resource element of the section of the resource grid to the event-based CSI report may be based on configuration information indicative of the allocation of the event-based CSI report.

By the user equipment determining that both an event-based CSI report and a non-event-based CSI report are to be transmitted on a PUSCH within a same section of a resource grid, determining a number of time resource units in which a DMRS is transmitted within the section of the resource grid, and allocating, based on the number, at least one resource element of the section of the resource grid to the event-based CSI report, it can be achieved that an event-based CSI report can be transmitted together with a non-event-based CSI report taking into account the number of time resource units in which a DMRS is transmitted. In particular, a resource allocation allowing the event-based CSI report and the non-event-based CSI report to be included within the same UCI message, e.g. multiplexed on PUSCH, can be achieved enabling at the same time an advantageous allocation for example in cases where the number of time resource units in which a DMRS is transmitted is greater than one.

In example embodiments of the second exemplary aspect, allocating the at least one resource element of the section of the resource grid to the event-based CSI report may be performed dynamically based on the number of time resource units in which a DMRS is transmitted.

In an embodiment, ECSI allocation may follow downlink control information (DCI) scheduling the PUSCH carrying both CSI part 1 + CSI part 2 and ECSI. For example, DCI may indicate whether CSI part 2 or ECSI is to be transmitted, or if both are to be transmitted in which order CSI part 2 and ECSI are allocated.

In an embodiment, ECSI allocation may follow a predefined rule. In an embodiment, ECSI allocation may follow a network configuration.

In example embodiments of the second exemplary aspect, the at least one memory may further store instructions that, when executed by the at least one processor, cause the user equipment to perform at least one of the following:
- allocating at least one resource element of the section of the resource grid to a first part of the non-event-based CSI report;
- allocating at least one resource element of the section of the resource grid to a second part of the non-event-based CSI report;
- allocating at least one resource element of the section of the resource grid to a hybrid automatic repeat request (HARQ) transmission;
- allocating at least one resource element of the section of the resource grid to user data.

In this respect, reference is made to the first exemplary aspect.

In example embodiments of the second exemplary aspect, if it has been determined that the number of time resource units in which a DMRS is transmitted is equal to one, allocating the at least one resource element may be performed such that the at least one resource element allocated to the event-based CSI report at least partially succeeds, with respect to an order of resource elements of the section of the resource grid, at least one resource element allocated to the first part of the non-event-based CSI report. For example, allocating the at least one resource element like this may be performed in response to determining that the number of time resource units in which a DMRS is transmitted is equal to one. By such an allocation, it can be achieved that the first part of the non-event-based CSI report is transmitted before the event-based CSI report.

In example embodiments of the second exemplary aspect, if it has been determined that the number of time resource units in which a DMRS is transmitted is equal to one, allocating the at least one resource element may be performed such that the at least one resource element allocated to the event-based CSI report at least partially alternates, with respect to an order of resource elements of the section of the resource grid, with at least one resource element allocated to a hybrid automatic repeat request (HARQ) transmission. For example, allocating the at least one resource element like this may be performed in response to determining that the number of time resource units in which a DMRS is transmitted is equal to one. In other words, the at least one resource element allocated to the event-based CSI report may be punctured by the at least one resource element allocated to the HARQ transmission. By such an allocation, it can be achieved that higher performance for HARQ feedback is ensured.

In example embodiments of the second exemplary aspect, if it has been determined that the number of time resource units in which a DMRS is transmitted is equal to one, allocating the at least one resource element may be performed such that the at least one resource element allocated to the event-based CSI report at least partially precedes, with respect to an order of resource elements of the section of the resource grid, at least one resource element allocated to the second part of the non-event-based CSI report. For example, allocating the at least one resource element like this may be performed in response to determining that the number of time resource units in which a DMRS is transmitted is equal to one. By such an allocation, it can be achieved that the event-based CSI report is transmitted before the second part of the non-event-based CSI report.

In example embodiments of the second exemplary aspect, if it has been determined that the number of time resource units in which a DMRS is transmitted is equal to one, allocating the at least one resource element may be performed such that the at least one resource element allocated to the event-based CSI report at least partially succeeds, with respect to an order of resource elements of the section of the resource grid, at least one resource element allocated to the second part of the non-event-based CSI report. For example, allocating the at least one resource element like this may be performed in response to determining that the number of time resource units in which a DMRS is transmitted is equal to one. By such an allocation, it can be achieved that the second part of the non-event-based CSI report is transmitted before the event-based CSI report.

In example embodiments of the second exemplary aspect, if it has been determined that the number of time resource units in which a DMRS is transmitted is equal to one, allocating the at least one resource element may be performed such that the at least one resource element allocated to the second part of the non-event-based CSI report at least partially alternates, with respect to an order of resource elements of the section of the resource grid, with at least one resource element allocated to a HARQ transmission. For example, allocating the at least one resource element like this may be performed in response to determining that the number of time resource units in which a DMRS is transmitted is equal to one. In other words, the at least one resource element allocated to the second part of the non-event-based CSI report may be punctured by the at least one resource element allocated to the HARQ transmission. By such an allocation, it can be achieved that higher performance for HARQ feedback is ensured.

In example embodiments of the second exemplary aspect, if it has been determined that the number of time resource units in which a DMRS is transmitted is equal to one, allocating the at least one resource element may be performed such that the at least one resource element allocated to the event-based CSI report at least partially alternates, with respect to an order of resource elements of the section of the resource grid, with the at least one resource element allocated to the second part of the non-event-based CSI report. For example, allocating the at least one resource element like this may be performed in response to determining that the number of time resource units in which a DMRS is transmitted is equal to one. In other words, the at least one resource element allocated to the event-based CSI report and the at least one resource element allocated to the second part of the non-event-based CSI report may be interleaved. By such an allocation, it can be achieved that the event-based CSI report and the second part of the non-event-based CSI report are transmitted simultaneously or at least approximately simultaneously.

In example embodiments of the second exemplary aspect, if it has been determined that the number of time resource units in which a DMRS is transmitted is larger than one, allocating the at least one resource element may be performed such that the at least one resource element allocated to the event-based CSI report at least partially succeeds, with respect to an order of resource elements of the section of the resource grid, at least one resource element allocated to the first part of the non-event-based CSI report. For example, allocating the at least one resource element like this may be performed in response to determining that the number of time resource units in which a DMRS is transmitted is larger than one, i.e. two or more. By such an allocation, it can be achieved that the first part of the non-event-based CSI report is transmitted before the event-based CSI report.

As used herein, a first additional time resource unit in which a DMRS is transmitted may be understood as a time resource unit in which a DMRS is transmitted besides a first time resource unit in which a DMRS is also transmitted. Furthermore, a second additional time resource unit in which a DMRS is transmitted may be understood as a time resource unit in which a DMRS is transmitted besides a first time resource unit in which a DMRS is also transmitted and besides a first additional time resource unit in which a DMRS is also transmitted. For example, a first time resource unit in which a DMRS is transmitted may typically, e.g. always, be present, and a first additional time resource unit in which a DMRS is transmitted and/or a second additional time resource unit in which a DMRS is transmitted may only be present under certain circumstances. For example, the first time resource unit, the first additional time resource unit, and the second additional time resource unit may be or correspond to OFDM symbols, respectively. The first additional time resource unit may have a larger symbol index that the first time resource unit. The second additional time resource unit may have a larger symbol index that the first additional time resource unit.

In example embodiments of the second exemplary aspect, if it has been determined that the number of time resource units in which a DMRS is transmitted is larger than one, allocating the at least one resource element may be performed such that at least one time resource unit, which comprises at least one resource element allocated to the event-based CSI report, is adjacent to a first additional time resource unit in which a DMRS is transmitted. For example, allocating the at least one resource element like this may be performed in response to determining that the number of time resource units in which a DMRS is transmitted is larger than one, i.e. two or more. For example, the at least one time resource unit, which comprises at least one resource element allocated to the event-based CSI report, may be or correspond to an OFDM symbol. For example, the at least one time resource unit, which comprises at least one resource element allocated to the event-based CSI report, may be directly adjacent to the first additional time resource unit in which a DMRS is transmitted, i.e. without any further time resource units in between. For example, the at least one time resource unit adjacent to the first additional time resource unit in which a DMRS is transmitted may not comprise resource elements allocated to the second part of the non-event-based CSI report. For example, the resource elements allocated to the event-based CSI report may be allocated contiguously within the at least one time resource unit adjacent to the first additional time resource unit in which a DMRS is transmitted. By allocating the at least one resource element such that at least one time resource unit, which comprises at least one resource element allocated to the event-based CSI report, is adjacent to a first additional time resource unit in which a DMRS is transmitted, it can be achieved that a better channel estimate is available for REs for the event-based CSI report.

In example embodiments of the second exemplary aspect, if it has been determined that the number of time resource units in which a DMRS is transmitted is larger than two, allocating the at least one resource element may be performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted. For example, allocating the at least one resource element like this may be performed in response to determining that the number of time resource units in which a DMRS is transmitted is larger than two, i.e. three or more. For example, the first time resource unit, which comprises at least one resource element allocated to the event-based CSI report, and the second time resource unit, which comprises at least one resource element allocated to the event-based CSI report, may be or correspond to OFDM symbols, respectively. For example, the first time resource unit, which comprises at least one resource element allocated to the event-based CSI report, may be directly adjacent to the first additional time resource unit in which a DMRS is transmitted, i.e. without any further time resource units in between. For example, the second time resource unit, which comprises at least one resource element allocated to the event-based CSI report, may be directly adjacent to the second additional time resource unit in which a DMRS is transmitted, i.e. without any further time resource units in between. For example, the first time resource unit, which comprises at least one resource element allocated to the event-based CSI report, may comprise a first number of resource elements allocated to the event-based CSI report, the second time resource unit, which comprises at least one resource element allocated to the event-based CSI report, may comprise a second number of resource elements allocated to the event-based CSI report, and the first and second number may differ by an absolute value of one at maximum. In other words, the resource elements allocated to the event-based CSI report may be allocated essentially evenly adjacent to the first and second additional time resource unit in which a DMRS is transmitted. For example, the time resource unit adjacent to the first additional time resource unit in which a DMRS is transmitted may not comprise resource elements allocated to the second part of the non-event-based CSI report. For example, the time resource unit adjacent to the second additional time resource unit in which a DMRS is transmitted may not comprise resource elements allocated to the second part of the non-event-based CSI report. For example, the resource elements allocated to the event-based CSI report may be allocated contiguously within the time resource unit adjacent to the first additional time resource unit in which a DMRS is transmitted. For example, the resource elements allocated to the event-based CSI report may be allocated contiguously within the time resource unit adjacent to the second additional time resource unit in which a DMRS is transmitted. By allocating the at least one resource element such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted, it can be achieved that a better channel estimate is available for REs for the event-based CSI report.

In example embodiments of the second exemplary aspect, if it has been determined that the number of time resource units in which a DMRS is transmitted is larger than one, allocating the at least one resource element may be performed such that at least one time resource unit, which comprises at least one resource element allocated to the second part of the non-event-based CSI report, is adjacent to a first time resource unit in which a DMRS is transmitted. For example, allocating the at least one resource element like this may be performed in response to determining that the number of time resource units in which a DMRS is transmitted is larger than one, i.e. two or more. For example, the at least one time resource unit, which comprises at least one resource element allocated to the second part of the non-event-based CSI report, may be or correspond to an OFDM symbol. For example, the at least one time resource unit, which comprises at least one resource element allocated to the second part of the non-event-based CSI report, may be directly adjacent to the first time resource unit in which a DMRS is transmitted, i.e. without any further time resource units in between.

In example embodiments of the second exemplary aspect, if it has been determined that the number of time resource units in which a DMRS is transmitted is larger than one, allocating the at least one resource element may be performed such that the at least one resource element allocated to the second part of the non-event-based CSI report at least partially alternates, with respect to an order of resource elements of the section of the resource grid, with at least one resource element allocated to a HARQ transmission. For example, allocating the at least one resource element like this may be performed in response to determining that the number of time resource units in which a DMRS is transmitted is larger than one, i.e. two or more. In other words, the at least one resource element allocated to the second part of the non-event-based CSI report may be punctured by the at least one resource element allocated to the HARQ transmission. By such an allocation, it can be achieved that higher performance for HARQ feedback is ensured.

In example embodiments of the second exemplary aspect, if it has been determined that the number of time resource units in which a DMRS is transmitted is larger than one, allocating the at least one resource element may be performed such that the at least one resource element allocated to the event-based CSI report at least partially displaces at least one resource element allocated to the second part of the non-event-based CSI report. For example, allocating the at least one resource element like this may be performed in response to determining that the number of time resource units in which a DMRS is transmitted is larger than one, i.e. two or more. For example, the at least one resource element allocated to the event-based CSI report may at least partially displace the at least one resource element allocated to the second part of the non-event-based CSI report compared to a scenario in which the at least one resource element allocated to the event-based CSI report is not present.

In example embodiments of the second exemplary aspect, if it has been determined that the number of time resource units in which a DMRS is transmitted is larger than one, allocating the at least one resource element may be performed such that at least one time resource unit, which comprises at least one resource element allocated to the event-based CSI report, is adjacent to a first time resource unit in which a DMRS is transmitted. For example, allocating the at least one resource element like this may be performed in response to determining that the number of time resource units in which a DMRS is transmitted is larger than one, i.e. two or more. For example, the at least one time resource unit, which comprises at least one resource element allocated to the event-based CSI report, may be or correspond to an OFDM symbol. For example, the at least one time resource unit, which comprises at least one resource element allocated to the event-based CSI report, may be directly adjacent to the first time resource unit in which a DMRS is transmitted, i.e. without any further time resource units in between.

In example embodiments of the second exemplary aspect, if it has been determined that the number of time resource units in which a DMRS is transmitted is larger than one, allocating the at least one resource element may be performed such that the at least one resource element allocated to the event-based CSI report at least partially alternates, with respect to an order of resource elements of the section of the resource grid, with at least one resource element allocated to a HARQ transmission. For example, allocating the at least one resource element like this may be performed in response to determining that the number of time resource units in which a DMRS is transmitted is larger than one, i.e. two or more. In other words, the at least one resource element allocated to the event-based CSI report may be punctured by the at least one resource element allocated to the HARQ transmission. By such an allocation, it can be achieved that higher performance for HARQ feedback is ensured.

In example embodiments of the second exemplary aspect, if it has been determined that the number of time resource units in which a DMRS is transmitted is larger than one, allocating the at least one resource element may be performed such that at least one time resource unit, which comprises at least one resource element allocated to the second part of the non-event-based CSI report, is adjacent to a first additional time resource unit in which a DMRS is transmitted. For example, allocating the at least one resource element like this may be performed in response to determining that the number of time resource units in which a DMRS is transmitted is larger than one, i.e. two or more. For example, the at least one time resource unit, which comprises at least one resource element allocated to the second part of the non-event-based CSI report, may be or correspond to an OFDM symbol. For example, the at least one time resource unit, which comprises at least one resource element allocated to the second part of the non-event-based CSI report, may be directly adjacent to the first additional time resource unit in which a DMRS is transmitted, i.e. without any further time resource units in between. For example, the at least one time resource unit adjacent to the first additional time resource unit in which a DMRS is transmitted may not comprise resource elements allocated to the event-based CSI report. For example, the resource elements allocated to the second part of the non-event-based CSI report may be allocated contiguously within the at least one time resource unit adjacent to the first additional time resource unit in which a DMRS is transmitted. By allocating the at least one resource element such that at least one time resource unit, which comprises at least one resource element allocated to the second part of the non-event-based CSI report, is adjacent to a first additional time resource unit in which a DMRS is transmitted, it can be achieved that a better channel estimate is available for REs for the second part of the non-event-based CSI report.

In example embodiments of the second exemplary aspect, if it has been determined that the number of time resource units in which a DMRS is transmitted is larger than two, allocating the at least one resource element may be performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted. For example, allocating the at least one resource element like this may be performed in response to determining that the number of time resource units in which a DMRS is transmitted is larger than two, i.e. three or more. For example, the first time resource unit, which comprises at least one resource element allocated to the second part of the non-event-based CSI report, and the second time resource unit, which comprises at least one resource element allocated to the second part of the non-event-based CSI report, may be or correspond to OFDM symbols, respectively. For example, the first time resource unit, which comprises at least one resource element allocated to the second part of the non-event-based CSI report, may be directly adjacent to the first additional time resource unit in which a DMRS is transmitted, i.e. without any further time resource units in between. For example, the second time resource unit, which comprises at least one resource element allocated to the second part of the non-event-based CSI report, may be directly adjacent to the second additional time resource unit in which a DMRS is transmitted, i.e. without any further time resource units in between. For example, the first time resource unit, which comprises at least one resource element allocated to the second part of the non-event-based CSI report, may comprise a first number of resource elements allocated to the second part of the non-event-based CSI report, the second time resource unit, which comprises at least one resource element allocated to the second part of the non-event-based CSI report, may comprise a second number of resource elements allocated to the second part of the non-event-based CSI report, and the first and second number may differ by an absolute value of one at maximum. In other words, the resource elements allocated to the second part of the non-event-based CSI report may be allocated essentially evenly adjacent to the first and second additional time resource unit in which a DMRS is transmitted. For example, the time resource unit adjacent to the first additional time resource unit in which a DMRS is transmitted may not comprise resource elements allocated to the event-based CSI report. For example, the time resource unit adjacent to the second additional time resource unit in which a DMRS is transmitted may not comprise resource elements allocated to the event-based CSI report. For example, the resource elements allocated to the second part of the non-event-based CSI report may be allocated contiguously within the time resource unit adjacent to the first additional time resource unit in which a DMRS is transmitted. For example, the resource elements allocated to the second part of the non-event-based CSI report may be allocated contiguously within the time resource unit adjacent to the second additional time resource unit in which a DMRS is transmitted. By allocating the at least one resource element such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted, it can be achieved that a better channel estimate is available for REs for the second part of the non-event-based CSI report CSI report

In example embodiments of the second exemplary aspect, if it has been determined that the number of time resource units in which a DMRS is transmitted is larger than one, allocating the at least one resource element may be performed such that the at least one resource element allocated to the event-based CSI report at least partially alternates, with respect to an order of resource elements of the section of the resource grid, with the at least one resource element allocated to the second part of the non-event-based CSI report. For example, allocating the at least one resource element like this may be performed in response to determining that the number of time resource units in which a DMRS is transmitted is larger than one, i.e. two or more. In other words, the at least one resource element allocated to the event-based CSI report and the at least one resource element allocated to the second part of the non-event-based CSI report may be interleaved. By such an allocation, it can be achieved that the event-based CSI report and the second part of the non-event-based CSI report are transmitted simultaneously or at least approximately simultaneously.

In example embodiments of the second exemplary aspect, the at least one memory may further store instructions that, when executed by the at least one processor, cause the user equipment to perform at least one of the following:
- receiving configuration information from a radio access node;
- determining that an event has occurred, wherein the event triggers an event-based CSI report;
- transmitting an uplink resource request to the radio access node;
- receiving uplink grant information from the radio access node;
- transmitting the event-based CSI report together with the non-event-based CSI report on the PUSCH;

In this respect, reference is made to the first exemplary aspect.

According to the second exemplary aspect, a respective method is disclosed, too. The method according to the second exemplary aspect may be performed by a user equipment. The method may comprise at least the following:
- determining that both an event-based channel state information (CSI) report and a non-event-based CSI report are to be transmitted on a physical uplink shared channel (PUSCH) within a same section of a resource grid, wherein the section of the resource grid is defined by a first plurality of consecutive time resource units and by a second plurality of consecutive frequency resource units;
- determining a number of time resource units in which a demodulation reference signal (DMRS) is transmitted within the section of the resource grid;
- allocating, based on the number of time resource units in which a DMRS is transmitted, at least one resource element of the section of the resource grid to the event-based CSI report.

Within the second exemplary aspect, the disclosure of any instruction that, when executed by the at least one processor of the user equipment, causes the user equipment to perform an action shall also be considered as a disclosure of a respective action of the method. Furthermore, the disclosure of any example or example embodiment of the user equipment shall also be considered as a respective example or example embodiment of the method.

According to the second exemplary aspect, a respective apparatus comprising means for performing a method according to the second exemplary aspect is disclosed, too. The apparatus may be a user equipment. Within the second exemplary aspect, the disclosure of any method action shall also be considered as a disclosure of means for performing the respective method action. Likewise, the disclosure of any means for performing a method action shall also be considered as a disclosure of the method action itself.

The means or functionality of the apparatus according to the second exemplary aspect can be implemented in hardware and/or software. They may comprise one or multiple modules or units providing the respective functionality. They may for instance comprise at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to the second exemplary aspect, a respective computer-readable medium is disclosed, too. The computer-readable medium may be non-transitory. The computer-readable medium according to the second exemplary aspect may comprise program instructions that, when executed by a user equipment, cause the user equipment to perform at least a method according to the second exemplary aspect.

The computer-readable medium according to the second exemplary aspect could for example be a disk or a memory or the like. The program instructions could be stored in the computer-readable medium in the form of instructions encoding the computer-readable medium. The computer-readable medium may be intended for taking part in the operation of a device, like an internal or external memory, for instance a read-only memory (ROM) or hard disk of a computer, or be intended for distribution of the program, like an optical disc.

According to the second exemplary aspect, a respective computer program is disclosed, too. The computer program according to the second exemplary aspect may comprise instructions which, when executed by a user equipment, cause the user equipment to at least perform a method according to the second exemplary aspect.

The computer program according to the second exemplary aspect may be stored on a computer-readable storage medium, in particular a tangible and/or non-transitory computer-readable storage medium. In particular, the computer program according to the second exemplary aspect may be stored on a non-transitory computer-readable medium according to the second exemplary aspect.

According to a third exemplary aspect, a user equipment is disclosed. The user equipment may comprise at least one processor and at least one memory. The at least one memory may store instructions that, when executed by the at least one processor, cause the user equipment to perform at least the following:
- determining that an event has occurred, wherein the event triggers an event-based channel state information (CSI) report;
- determining that both the event-based CSI report and a non-event-based CSI report are to be transmitted on a physical uplink shared channel (PUSCH) within a same section of a resource grid, wherein the section of the resource grid is defined by a first plurality of consecutive time resource units and by a second plurality of consecutive frequency resource units.

In this respect, reference is made to the first and second exemplary aspect.

By the user equipment determining that an event has occurred, wherein the event triggers an event-based CSI report, and determining that both the event-based CSI report and a non-event-based CSI report are to be transmitted on a PUSCH within a same section of a resource grid, it can be achieved that an event-based CSI report can be transmitted together with a non-event-based CSI report. In particular, the UE may recognize that the event-based CSI report is to be transmitted together with the non-event-based CSI report, and may allocate resources for the transmission accordingly.

In example embodiments of the third exemplary aspect, the at least one memory may further store instructions that, when executed by the at least one processor, cause the user equipment to perform the following:
- allocating at least one resource element of the section of the resource grid to the event-based CSI report. In this respect, reference is made to the first exemplary aspect.

In example embodiments of the third exemplary aspect, the at least one memory may further store instructions that, when executed by the at least one processor, cause the user equipment to perform at least one of the following:
- allocating at least one resource element of the section of the resource grid to a first part of the non-event-based CSI report;
- allocating at least one resource element of the section of the resource grid to a second part of the non-event-based CSI report;
- allocating at least one resource element of the section of the resource grid to a hybrid automatic repeat request (HARQ) transmission;
- allocating at least one resource element of the section of the resource grid to user data.

In this respect, reference is made to the first exemplary aspect.

In example embodiments of the third exemplary aspect, allocating the at least one resource element of the section of the resource grid to the event-based CSI report may be performed according to a fixed or predefined scheme. For example, the fixed scheme may be a fixed scheme which does not take into account a number of time resource units which include a demodulation reference signal (DMRS) transmission. In other words, the fixed scheme may be independent of a number of time resource units which include a DMRS transmission. For example, the fixed scheme may define fixed positions to which one or more of the at least one resource element is, e.g. always, allocated. For example, the fixed scheme may define fixed relative positions to which one or more of the at least one resource element is, e.g. always, allocated.

In example embodiments of the third exemplary aspect, allocating the at least one resource element may be performed such that the at least one resource element allocated to the event-based CSI report at least partially succeeds, with respect to an order of resource elements of the section of the resource grid, at least one resource element allocated to the first part of the non-event-based CSI report. In this respect, reference is made to the first exemplary aspect.

In example embodiments of the third exemplary aspect, allocating the at least one resource element may be performed such that the at least one resource element allocated to the event-based CSI report at least partially alternates, with respect to an order of resource elements of the section of the resource grid, with at least one resource element allocated to a HARQ transmission. In this respect, reference is made to the first exemplary aspect.

In example embodiments of the third exemplary aspect, allocating the at least one resource element may be performed such that the at least one resource element allocated to the event-based CSI report at least partially precedes, with respect to an order of resource elements of the section of the resource grid, at least one resource element allocated to the second part of the non-event-based CSI report. In this respect, reference is made to the first exemplary aspect.

In example embodiments of the third exemplary aspect, allocating the at least one resource element may be performed such that the at least one resource element allocated to the event-based CSI report at least partially succeeds, with respect to an order of resource elements of the section of the resource grid, at least one resource element allocated to the second part of the non-event-based CSI report. In this respect, reference is made to the first exemplary aspect.

In example embodiments of the third exemplary aspect, allocating the at least one resource element may be performed such that the at least one resource element allocated to the second part of the non-event-based CSI report at least partially alternates, with respect to an order of resource elements of the section of the resource grid, with at least one resource element allocated to a HARQ transmission. In this respect, reference is made to the first exemplary aspect.

In example embodiments of the third exemplary aspect, allocating the at least one resource element may be performed such that the at least one resource element allocated to the event-based CSI report at least partially alternates, with respect to an order of resource elements of the section of the resource grid, with the at least one resource element allocated to the second part of the non-event-based CSI report. In this respect, reference is made to the first exemplary aspect.

In example embodiments of the third exemplary aspect, the at least one memory may further store instructions that, when executed by the at least one processor, cause the user equipment to perform the following:
- determining a number of time resource units in which a demodulation reference signal (DMRS) is transmitted within the section of the resource grid.

In those embodiments, allocating the at least one resource element of the section of the resource grid to the event-based CSI report may be based on the number of time resource units in which a DMRS is transmitted. In this respect, reference is made to the second exemplary aspect. For example, allocating the at least one resource element of the section of the resource grid to the event-based CSI report may be performed dynamically based on the number of time resource units in which a DMRS is transmitted.

In example embodiments of the third exemplary aspect, if it has been determined that the number of time resource units in which a DMRS is transmitted is equal to one, allocating the at least one resource element may be performed such that the at least one resource element allocated to the event-based CSI report at least partially succeeds, with respect to an order of resource elements of the section of the resource grid, at least one resource element allocated to the first part of the non-event-based CSI report. In this respect, reference is made to the second exemplary aspect.

In example embodiments of the third exemplary aspect, if it has been determined that the number of time resource units in which a DMRS is transmitted is equal to one, allocating the at least one resource element may be performed such that the at least one resource element allocated to the event-based CSI report at least partially alternates, with respect to an order of resource elements of the section of the resource grid, with at least one resource element allocated to a hybrid automatic repeat request (HARQ) transmission. In this respect, reference is made to the second exemplary aspect.

In example embodiments of the third exemplary aspect, if it has been determined that the number of time resource units in which a DMRS is transmitted is equal to one, allocating the at least one resource element may be performed such that the at least one resource element allocated to the event-based CSI report at least partially precedes, with respect to an order of resource elements of the section of the resource grid, at least one resource element allocated to the second part of the non-event-based CSI report. In this respect, reference is made to the second exemplary aspect.

In example embodiments of the third exemplary aspect, if it has been determined that the number of time resource units in which a DMRS is transmitted is equal to one, allocating the at least one resource element may be performed such that the at least one resource element allocated to the event-based CSI report at least partially succeeds, with respect to an order of resource elements of the section of the resource grid, at least one resource element allocated to the second part of the non-event-based CSI report. In this respect, reference is made to the second exemplary aspect.

In example embodiments of the third exemplary aspect, if it has been determined that the number of time resource units in which a DMRS is transmitted is equal to one, allocating the at least one resource element may be performed such that the at least one resource element allocated to the second part of the non-event-based CSI report at least partially alternates, with respect to an order of resource elements of the section of the resource grid, with at least one resource element allocated to a HARQ transmission. In this respect, reference is made to the second exemplary aspect.

In example embodiments of the third exemplary aspect, if it has been determined that the number of time resource units in which a DMRS is transmitted is equal to one, allocating the at least one resource element may be performed such that the at least one resource element allocated to the event-based CSI report at least partially alternates, with respect to an order of resource elements of the section of the resource grid, with the at least one resource element allocated to the second part of the non-event-based CSI report. In this respect, reference is made to the second exemplary aspect.

In example embodiments of the third exemplary aspect, if it has been determined that the number of time resource units in which a DMRS is transmitted is larger than one, allocating the at least one resource element may be performed such that the at least one resource element allocated to the event-based CSI report at least partially succeeds, with respect to an order of resource elements of the section of the resource grid, at least one resource element allocated to the first part of the non-event-based CSI report. In this respect, reference is made to the second exemplary aspect.

In example embodiments of the third exemplary aspect, if it has been determined that the number of time resource units in which a DMRS is transmitted is larger than one, allocating the at least one resource element may be performed such that at least one time resource unit, which comprises at least one resource element allocated to the event-based CSI report, is adjacent to a first additional time resource unit in which a DMRS is transmitted. In this respect, reference is made to the second exemplary aspect.

In example embodiments of the third exemplary aspect, if it has been determined that the number of time resource units in which a DMRS is transmitted is larger than two, allocating the at least one resource element may be performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted. In this respect, reference is made to the second exemplary aspect.

In example embodiments of the third exemplary aspect, if it has been determined that the number of time resource units in which a DMRS is transmitted is larger than one, allocating the at least one resource element may be performed such that at least one time resource unit, which comprises at least one resource element allocated to the second part of the non-event-based CSI report, is adjacent to a first time resource unit in which a DMRS is transmitted. In this respect, reference is made to the second exemplary aspect.

In example embodiments of the third exemplary aspect, if it has been determined that the number of time resource units in which a DMRS is transmitted is larger than one, allocating the at least one resource element may be performed such that the at least one resource element allocated to the second part of the non-event-based CSI report at least partially alternates, with respect to an order of resource elements of the section of the resource grid, with at least one resource element allocated to a HARQ transmission. In this respect, reference is made to the second exemplary aspect.

In example embodiments of the third exemplary aspect, if it has been determined that the number of time resource units in which a DMRS is transmitted is larger than one, allocating the at least one resource element may be performed such that the at least one resource element allocated to the event-based CSI report at least partially displaces at least one resource element allocated to the second part of the non-event-based CSI report. In this respect, reference is made to the second exemplary aspect.

In example embodiments of the third exemplary aspect, if it has been determined that the number of time resource units in which a DMRS is transmitted is larger than one, allocating the at least one resource element may be performed such that at least one time resource unit, which comprises at least one resource element allocated to the event-based CSI report, is adjacent to a first time resource unit in which a DMRS is transmitted. In this respect, reference is made to the second exemplary aspect.

In example embodiments of the third exemplary aspect, if it has been determined that the number of time resource units in which a DMRS is transmitted is larger than one, allocating the at least one resource element may be performed such that the at least one resource element allocated to the event-based CSI report at least partially alternates, with respect to an order of resource elements of the section of the resource grid, with at least one resource element allocated to a HARQ transmission. In this respect, reference is made to the second exemplary aspect.

In example embodiments of the third exemplary aspect, if it has been determined that the number of time resource units in which a DMRS is transmitted is larger than one, allocating the at least one resource element may be performed such that at least one time resource unit, which comprises at least one resource element allocated to the second part of the non-event-based CSI report, is adjacent to a first additional time resource unit in which a DMRS is transmitted. In this respect, reference is made to the second exemplary aspect.

In example embodiments of the third exemplary aspect, if it has been determined that the number of time resource units in which a DMRS is transmitted is larger than two, allocating the at least one resource element may be performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted. In this respect, reference is made to the second exemplary aspect.

In example embodiments of the third exemplary aspect, if it has been determined that the number of time resource units in which a DMRS is transmitted is larger than one, allocating the at least one resource element may be performed such that the at least one resource element allocated to the event-based CSI report at least partially alternates, with respect to an order of resource elements of the section of the resource grid, with the at least one resource element allocated to the second part of the non-event-based CSI report. In this respect, reference is made to the second exemplary aspect.

In example embodiments of the third exemplary aspect, the at least one memory may further store instructions that, when executed by the at least one processor, cause the user equipment to perform at least one of the following:
- receiving configuration information from a radio access node;
- transmitting an uplink resource request to the radio access node;
- receiving uplink grant information from the radio access node;
- transmitting the event-based CSI report together with the non-event-based CSI report on the PUSCH;

In this respect, reference is made to the first exemplary aspect.

According to the third exemplary aspect, a respective method is disclosed, too. The method according to the third exemplary aspect may be performed by a user equipment. The method may comprise at least the following:
- determining that an event has occurred, wherein the event triggers an event-based channel state information (CSI) report;
- determining that both the event-based CSI report and a non-event-based CSI report are to be transmitted on a physical uplink shared channel (PUSCH) within a same section of a resource grid, wherein the section of the resource grid is defined by a first plurality of consecutive time resource units and by a second plurality of consecutive frequency resource units.

Within the third exemplary aspect, the disclosure of any instruction that, when executed by the at least one processor of the user equipment, causes the user equipment to perform an action shall also be considered as a disclosure of a respective action of the method. Furthermore, the disclosure of any example or example embodiment of the user equipment shall also be considered as a respective example or example embodiment of the method.

According to the third exemplary aspect, a respective apparatus comprising means for performing a method according to the third exemplary aspect is disclosed, too. The apparatus may be a user equipment. Within the third exemplary aspect, the disclosure of any method action shall also be considered as a disclosure of means for performing the respective method action. Likewise, the disclosure of any means for performing a method action shall also be considered as a disclosure of the method action itself.

The means or functionality of the apparatus according to the third exemplary aspect can be implemented in hardware and/or software. They may comprise one or multiple modules or units providing the respective functionality. They may for instance comprise at least one processor for executing computer program code for performing the required functions, at least one memory storing the program code, or both. Alternatively, they could comprise for instance circuitry that is designed to implement the required functions, for instance implemented in a chipset or a chip, like an integrated circuit. In general, the means may comprise for instance one or more processing means or processors.

According to the third exemplary aspect, a respective computer-readable medium is disclosed, too. The computer-readable medium may be non-transitory. The computer-readable medium according to the third exemplary aspect may comprise program instructions that, when executed by a user equipment, cause the user equipment to perform at least a method according to the third exemplary aspect.

The computer-readable medium according to the third exemplary aspect could for example be a disk or a memory or the like. The program instructions could be stored in the computer-readable medium in the form of instructions encoding the computer-readable medium. The computer-readable medium may be intended for taking part in the operation of a device, like an internal or external memory, for instance a read-only memory (ROM) or hard disk of a computer, or be intended for distribution of the program, like an optical disc.

According to the third exemplary aspect, a respective computer program is disclosed, too. The computer program according to the third exemplary aspect may comprise instructions which, when executed by a user equipment, cause the user equipment to at least perform a method according to the third exemplary aspect.

The computer program according to the third exemplary aspect may be stored on a computer-readable storage medium, in particular a tangible and/or non-transitory computer-readable storage medium. In particular, the computer program according to the third exemplary aspect may be stored on a non-transitory computer-readable medium according to the third exemplary aspect.

It is to be understood that the presentation of the embodiments disclosed herein is merely by way of examples and non-limiting.

Other features of the present disclosure will become apparent from the following detailed description considered in conjunction with the accompanying drawings. It is to be understood, however, that the drawings are designed solely for purposes of illustration and not as a definition of the limits of the present disclosure, for which reference should be made to the appended claims. It should be further understood that the drawings are not drawn to scale and that they are merely intended to conceptually illustrate the structures and procedures described herein.

### BRIEF DESCRIPTION OF THE FIGURES

Some example embodiments will now be described with reference to the accompanying drawings in which
- FIG. 1: shows, in a flow chart, an example embodiment of a method according to the first exemplary aspect of the present disclosure;
- FIG. 2: shows, in a flow chart, another example embodiment of a method according to the first exemplary aspect;
- FIG. 3: shows, in a schematic illustration, a section of a resource grid with an exemplary resource allocation according to the example embodiment of the method in FIG. 2;
- FIG. 4: shows, in a flow chart, another example embodiment of a method according to the first exemplary aspect;
- FIG. 5: shows, in a schematic illustration, a section of a resource grid with an exemplary resource allocation according to the example embodiment of the method in FIG. 4;
- FIG. 6: shows, in a flow chart, another example embodiment of a method according to the first exemplary aspect;
- FIG. 7: shows, in a schematic illustration, a section of a resource grid with an exemplary resource allocation according to the example embodiment of the method in FIG. 6;
- FIG. 8: shows, in a flow chart, an example embodiment of a method according to the second exemplary aspect of the present disclosure;
- FIG. 9: shows, in a flow chart, another example embodiment of a method according to the second exemplary aspect;
- FIG. 10: shows, in a flow chart, another example embodiment of a method according to the second exemplary aspect;
- FIG. 11: shows, in a flow chart, another example embodiment of a method according to the second exemplary aspect;
- FIG. 12: shows, in a flow chart, another example embodiment of a method according to the second exemplary aspect;
- FIG. 13: shows, in a schematic illustration, a section of a resource grid with an exemplary resource allocation according to the example embodiment of the method in FIG. 12;
- FIG. 14: shows, in a flow chart, another example embodiment of a method according to the second exemplary aspect;
- FIG. 15: shows, in a schematic illustration, a section of a resource grid with an exemplary resource allocation according to the example embodiment of the method in FIG. 14;
- FIG. 16: shows, in a flow chart, another example embodiment of a method according to the second exemplary aspect;
- FIG. 17: shows, in a schematic illustration, a section of a resource grid with an exemplary resource allocation according to the example embodiment of the method in FIG. 16;
- FIG. 18: shows, in a flow chart, another example embodiment of a method according to the second exemplary aspect;
- FIG. 19: shows, in a schematic illustration, a section of a resource grid with an exemplary resource allocation according to the example embodiment of the method in FIG. 18;
- FIG. 20: shows, in a flow chart, an example embodiment of a method according to the third exemplary aspect of the present disclosure;
- FIG. 21: shows, in a schematic block diagram, an example embodiment of an apparatus according to the first aspect of the present disclosure; and
- FIG. 22: shows, in a schematic illustration, examples of tangible and non-transitory computer-readable storage media.

### DETAILED DESCRIPTION OF THE FIGURES

The following description serves to deepen the understanding of the present disclosure and shall be understood to complement and be read together with the description of example embodiments of the present disclosure as provided in the above SUMMARY section of this specification. While the examples below may use 5G as a reference, this is to be considered (e.g. only) as a non-limiting example, and any next generation systems or standards above and beyond 5G are also considered.

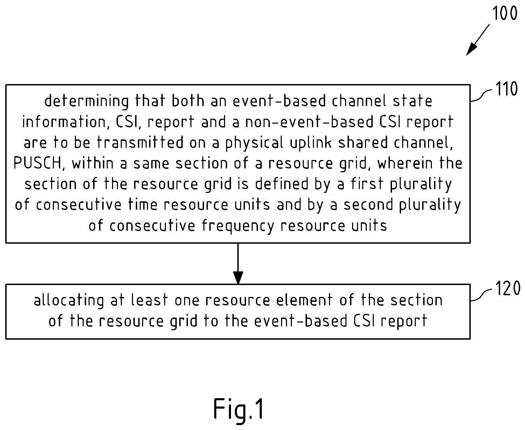

In the following and with reference to FIG. 1, an example embodiment of a method according to the first exemplary aspect is shown in a flow chart. The method 100 is performed by a UE.

Within action 110, it is determined that both an event-based CSI report and a non-event-based CSI report are to be transmitted on a PUSCH within a same section of a resource grid, wherein the section of the resource grid is defined by a first plurality of consecutive time resource units and by a second plurality of consecutive frequency resource units.

Within action 120, at least one resource element of the section of the resource grid is allocated to the event-based CSI report.

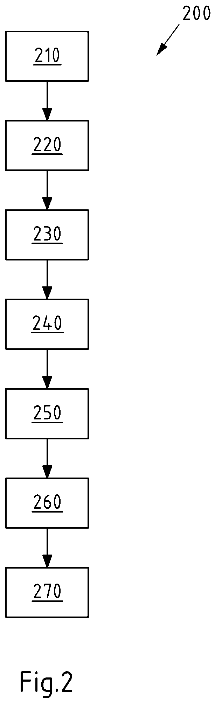

Turning now to FIG. 2, another example embodiment of a method according to the first exemplary aspect is shown in a flow chart. The method 200 is performed by a UE.

Within action 210, UE receives configuration information from a radio access node and, according to the configuration information, is configured with non-event-based and event-based CSI reporting, and related configurations.

Within action 220, UE determines that an event has occurred which triggers event-based CSI reporting. In this non-limiting example, UE determines that a channel quality has dropped below a threshold.

Within action 230, UE transmits PUCCH to request uplink resources for event-based CSI reporting.

Within action 240, UE receives UL grant for PUSCH to transmit event-based CSI.

Within action 250, UE determines that it has also non-event-based CSI to transmit along with the event-based CSI (ECSI).

Within action 260, UE allocates resource elements for non-event-based CSI and ECSI. In this example embodiment, ECSI is allocated after CSI part 1, ECSI is punctured to allocate HARQ-ACK if HARQ is to be transmitted, and CSI part 2 is allocated at least partially after ECSI without being punctured by HARQ-ACK.

Within action 270, UE transmits PUSCH carrying both the non-event-based CSI and the ECSI.

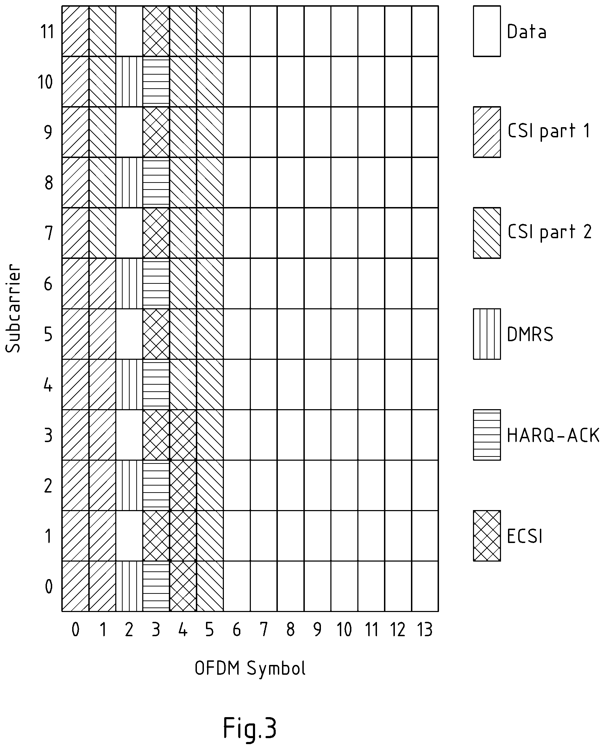

Turning now to FIG. 3, a schematic illustration of a section of a resource grid is shown with an exemplary resource allocation resulting from action 260 in FIG. 2. As shown in FIG. 3, the section of the resource grid is spanned by 14 consecutive OFDM symbols with OFDM symbol indices from 0 to 13, and by 12 consecutive subcarriers with subcarrier indices from 0 to 11. Accordingly, the section of the resource grid consists of 168 REs, which are shown as rectangular boxes. Each RE can be uniquely identified by an OFDM symbol index i ranging from 0 to 13 and a subcarrier index j ranging from 0 to 11. Furthermore, an order of the RE_{i,j} can be defined as follows: RE_{0,0}, RE_{0,1}, RE_{0,2}, ..., RE_{0,11}, RE_{1,0}, RE_{1,1}, ..., RE_{1,11}, RE_{2,0}, RE_{2,1}, ..., RE_{2,11}, ..., RE_{13,0}, RE_{13,1}, RE_{13,2}, ... , RE_{13,11}.

FIG. 3 also shows, by way of example, a mapping of the RE_{i,j} to user data, CSI part 1, CSI part 2, DMRS, HARQ-ACK and ECSI. In this example, the positions of the DMRS REs have been predefined, and the other REs have been allocated by the UE. As shown in FIG. 3, the ECSI REs in OFDM symbol with index 3 are punctured by HARQ-ACK REs, i.e. ECSI REs and HARQ-ACK REs alternate with respect to the above-defined order of REs. Furthermore, as shown in FIG. 3, the ECSI REs partially precede the CSI part 2 REs, i.e. the last ECSI RE in OFDM symbol with index 4 and subcarrier with index 3 precedes the last CSI part 2 RE in OFDM symbol with index 5 and subcarrier with index 11.

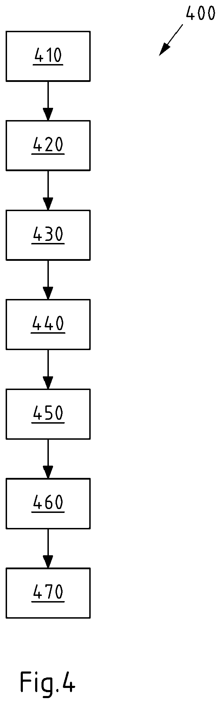

Turning now to FIG. 4, another example embodiment of a method according to the first exemplary aspect is shown in a flow chart. The method 400 is performed by a UE.

Within action 410, UE receives configuration information from a radio access node and, according to the configuration information, is configured with non-event-based and event-based CSI reporting, and related configurations.

Within action 420, UE determines that an event has occurred which ECSI reporting. In this non-limiting example, UE determines that a channel quality has dropped below a threshold.

Within action 430, UE transmits PUCCH to request uplink resources for ECSI reporting.

Within action 440, UE receives UL grant for PUSCH to transmit ECSI.

Within action 450, UE determines that it has also non-event-based CSI to transmit along with the ECSI.

Within action 460, UE allocates resource elements for non-event-based CSI and ECSI. In this example embodiment, ECSI is allocated after CSI part 2 without being punctured by HARQ-ACK, and CSI part 2 is punctured to allocate HARQ-ACK if HARQ is to be transmitted.

Within action 470, UE transmits PUSCH carrying both the non-event-based CSI and the ECSI.

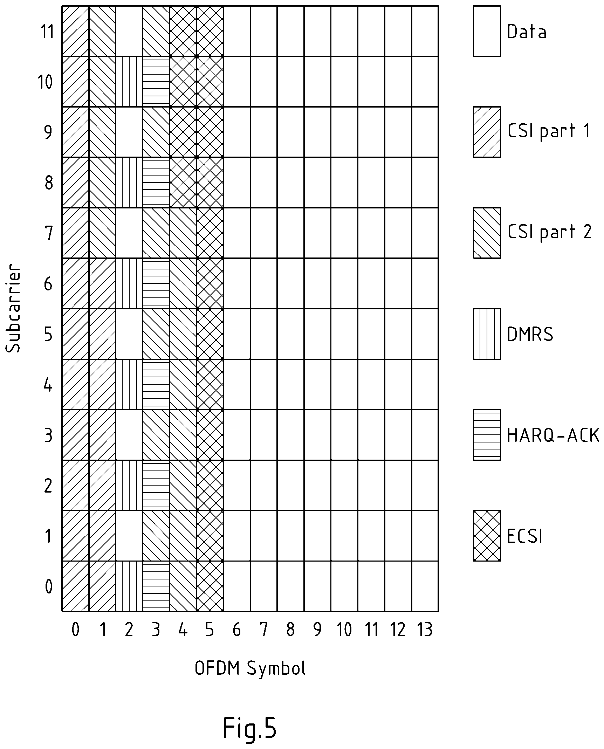

Turning now to FIG. 5, a schematic illustration of a section of a resource grid is shown with an exemplary resource allocation resulting from action 460 in FIG. 4. Again, the section of the resource grid is spanned by 14 consecutive OFDM symbols and 12 consecutive subcarriers, and an order of the RE_{i,j} can be defined as explained in the context of FIG. 3. FIG. 5 again shows, by way of example, a mapping of the RE_{i,j} to user data, CSI part 1, CSI part 2, DMRS, HARQ-ACK and ECSI. In this example, the positions of the DMRS REs have been predefined, and the other REs have been allocated by the UE. As shown in FIG. 5, the CSI part 2 REs in OFDM symbol with index 3 are punctured by HARQ-ACK REs, i.e. CSI part 2 REs and HARQ-ACK REs alternate with respect to the above-defined order of REs. Furthermore, as shown in FIG. 5, the ECSI REs partially succeed the CSI part 2 REs, i.e. the last ECSI RE in OFDM symbol with index 5 and subcarrier with index 11 succeeds the last CSI part 2 RE in OFDM symbol with index 4 and subcarrier with index 7.

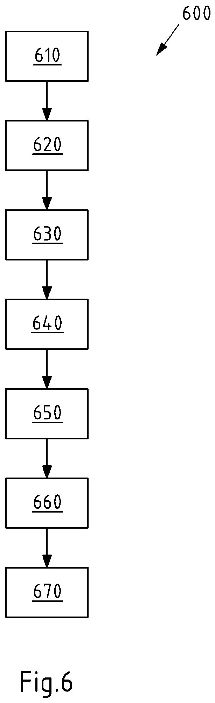

Turning now to FIG. 6, another example embodiment of a method according to the first exemplary aspect is shown in a flow chart. The method 600 is performed by a UE.

Within action 610, UE receives configuration information from a radio access node and, according to the configuration information, is configured with non-event-based and event-based CSI reporting, and related configurations.

Within action 620, UE determines that an event has occurred which ECSI reporting. In this non-limiting example, UE determines that a channel quality has dropped below a threshold.

Within action 630, UE transmits PUCCH to request uplink resources for ECSI reporting.

Within action 640, UE receives UL grant for PUSCH to transmit ECSI.

Within action 650, UE determines that it has also non-event-based CSI to transmit along with the ECSI.

Within action 660, UE allocates resource elements for non-event-based CSI and ECSI. In this example embodiment, ECSI and CSI part 2 are allocated in an interleaved manner with RE granularity.

Within action 670, UE transmits PUSCH carrying both the non-event-based CSI and the ECSI.

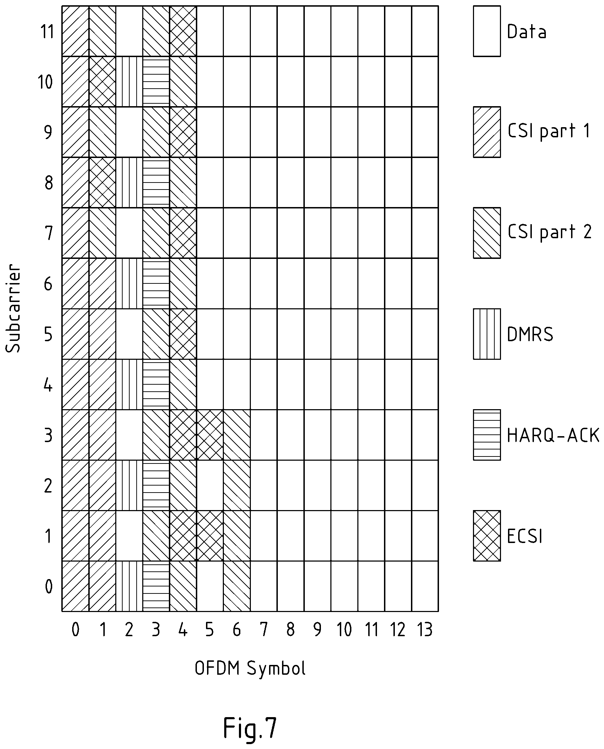

Turning now to FIG. 7, a schematic illustration of a section of a resource grid is shown with an exemplary resource allocation resulting from action 660 in FIG. 6. Again, the section of the resource grid is spanned by 14 consecutive OFDM symbols and 12 consecutive subcarriers, and an order of the RE_{i,j} can be defined as explained in the context of FIG. 3. In the example of FIG. 7, the CSI part 2 REs in OFDM symbol with index 3 are punctured by HARQ-ACK REs, i.e. CSI part 2 REs and HARQ-ACK REs alternate with respect to the above-defined order of REs. Furthermore, as shown in FIG. 7, the ECSI REs and the CSI part 2 REs are partially interleaved, i.e. the ECSI REs and CSI part 2 REs in OFDM symbols with indices 1 and 4 alternate with respect to the above-defined order of REs.

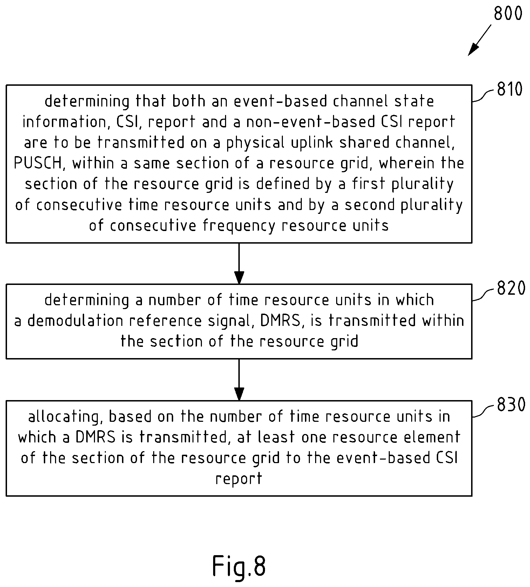

Turning now to FIG. 8, an example embodiment of a method according to the second exemplary aspect is shown in a flow chart. The method 800 is performed by a UE.

Within action 810, it is determined that both an event-based CSI report and a non-event-based CSI report are to be transmitted on a PUSCH within a same section of a resource grid, wherein the section of the resource grid is defined by a first plurality of consecutive time resource units and by a second plurality of consecutive frequency resource units.

Within action 820, a number of time resource units in which a DMRS is transmitted within the section of the resource grid is determined.

Within action 830, at least one resource element of the section of the resource grid is allocated, based on the number of time resource units in which a DMRS is transmitted, to the event-based CSI report.

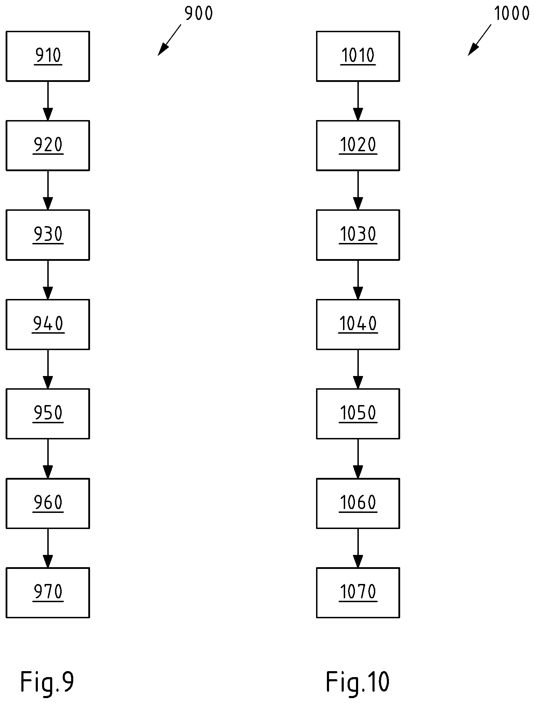

Turning now to FIG. 9, another example embodiment of a method according to the second exemplary aspect is shown in a flow chart. The method 900 is performed by a UE.

Within action 910, UE receives configuration information from a radio access node and, according to the configuration information, is configured with non-event-based and event-based CSI reporting, and related configurations.

Within action 920, UE determines that an event has occurred which triggers event-based CSI reporting. In this non-limiting example, UE determines that a channel quality has dropped below a threshold.

Within action 930, UE transmits PUCCH to request uplink resources for event-based CSI reporting.

Within action 940, UE receives UL grant for PUSCH to transmit event-based CSI.

Within action 950, UE determines that it has also non-event-based CSI to transmit along with the event-based CSI (ECSI). Furthermore, UE determines that DMRS is transmitted in only one symbol in the section of the resource grid relevant for the CSI and ECSI transmission.

Within action 960, UE allocates resource elements for non-event-based CSI and ECSI. In this example embodiment, ECSI is allocated after CSI part 1, ECSI is punctured to allocate HARQ-ACK if HARQ is to be transmitted, and CSI part 2 is allocated at least partially after ECSI without being punctured by HARQ-ACK. Accordingly, the resulting resource allocation in this non-limiting example is identical to the allocation shown in FIG. 3.

Within action 970, UE transmits PUSCH carrying both the non-event-based CSI and the ECSI.

Turning now to FIG. 10, another example embodiment of a method according to the second exemplary aspect is shown in a flow chart. The method 1000 is performed by a UE.

Within action 1010, UE receives configuration information from a radio access node and, according to the configuration information, is configured with non-event-based and event-based CSI reporting, and related configurations.

Within action 1020, UE determines that an event has occurred which triggers event-based CSI reporting. In this non-limiting example, UE determines that a channel quality has dropped below a threshold.

Within action 1030, UE transmits PUCCH to request uplink resources for event-based CSI reporting.

Within action 1040, UE receives UL grant for PUSCH to transmit event-based CSI.

Within action 1050, UE determines that it has also non-event-based CSI to transmit along with the event-based CSI (ECSI). Furthermore, UE determines that DMRS is transmitted in only one symbol in the section of the resource grid relevant for the CSI and ECSI transmission.

Within action 1060, UE allocates resource elements for non-event-based CSI and ECSI. In this example embodiment, ECSI is allocated after CSI part 2 without being punctured by HARQ-ACK, and CSI part 2 is punctured to allocate HARQ-ACK if HARQ is to be transmitted. Accordingly, the resulting resource allocation in this non-limiting example is identical to the allocation shown in FIG. 5.

Within action 1070, UE transmits PUSCH carrying both the non-event-based CSI and the ECSI.

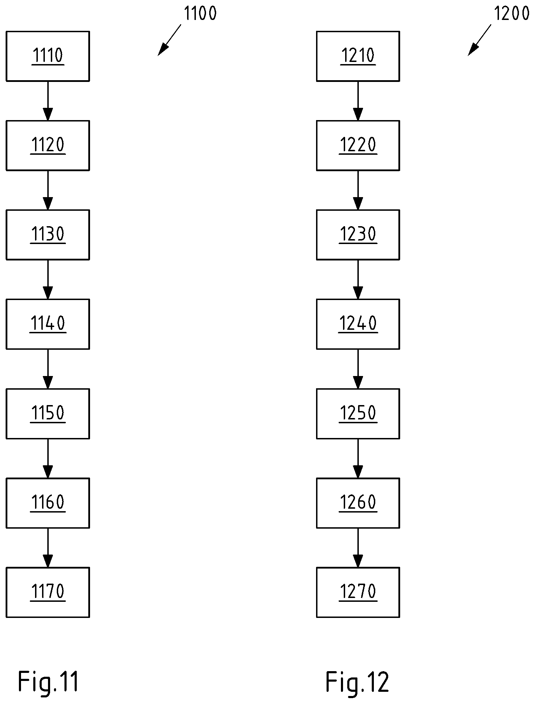

Turning now to FIG. 11, another example embodiment of a method according to the second exemplary aspect is shown in a flow chart. The method 1100 is performed by a UE.

Within action 1110, UE receives configuration information from a radio access node and, according to the configuration information, is configured with non-event-based and event-based CSI reporting, and related configurations.

Within action 1120, UE determines that an event has occurred which triggers event-based CSI reporting. In this non-limiting example, UE determines that a channel quality has dropped below a threshold.

Within action 1130, UE transmits PUCCH to request uplink resources for event-based CSI reporting.

Within action 1140, UE receives UL grant for PUSCH to transmit event-based CSI.

Within action 1150, UE determines that it has also non-event-based CSI to transmit along with the event-based CSI (ECSI). Furthermore, UE determines that DMRS is transmitted in only one symbol in the section of the resource grid relevant for the CSI and ECSI transmission.

Within action 1160, UE allocates resource elements for non-event-based CSI and ECSI. In this example embodiment, ECSI and CSI part 2 are allocated in an interleaved manner with RE granularity. Accordingly, the resulting resource allocation in this non-limiting example is identical to the allocation shown in FIG. 7.

Within action 1170, UE transmits PUSCH carrying both the non-event-based CSI and the ECSI.

Turning now to FIG. 12, another example embodiment of a method according to the second exemplary aspect is shown in a flow chart. The method 1200 is performed by a UE.

Within action 1210, UE receives configuration information from a radio access node and, according to the configuration information, is configured with non-event-based and event-based CSI reporting, and related configurations.

Within action 1220, UE determines that an event has occurred which triggers event-based CSI reporting. In this non-limiting example, UE determines that a channel quality has dropped below a threshold.

Within action 1230, UE transmits PUCCH to request uplink resources for event-based CSI reporting.

Within action 1240, UE receives UL grant for PUSCH to transmit event-based CSI.

Within action 1250, UE determines that it has also non-event-based CSI to transmit along with the event-based CSI (ECSI). Furthermore, UE determines that in this non-limiting example, DMRS is transmitted in three symbols in the section of the resource grid relevant for the CSI and ECSI transmission.

Within action 1260, UE allocates resource elements for non-event-based CSI and ECSI. In this example embodiment, ECSI is allocated around the first additional DMRS symbol, i.e. around the second OFDM symbol in which DMRS is transmitted.

Within action 1270, UE transmits PUSCH carrying both the non-event-based CSI and the ECSI.

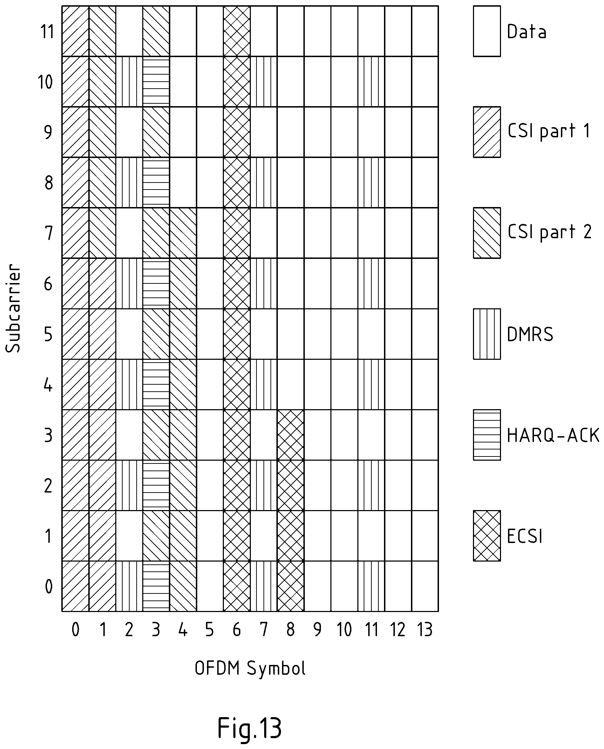

Turning now to FIG. 13, a schematic illustration of a section of a resource grid is shown with an exemplary resource allocation resulting from action 1260 in FIG. 12. Again, the section of the resource grid is spanned by 14 consecutive OFDM symbols and 12 consecutive subcarriers, and an order of the RE_{i,j} can be defined as explained in the context of FIG. 3. FIG. 12 again shows, by way of example, a mapping of the RE_{i,j} to user data, CSI part 1, CSI part 2, DMRS, HARQ-ACK and ECSI. In this example, the positions of the DMRS REs have been predefined, and the other REs have been allocated by the UE. As shown in FIG. 13, the ECSI in OFDM symbols with indices 6 and 8 is allocated around the first additional DMRS symbol with index 7, i.e. the ECSI in OFDM symbols with indices 6 and 8 is adjacent, to the left and right, to the first additional DMRS symbol with index 7.

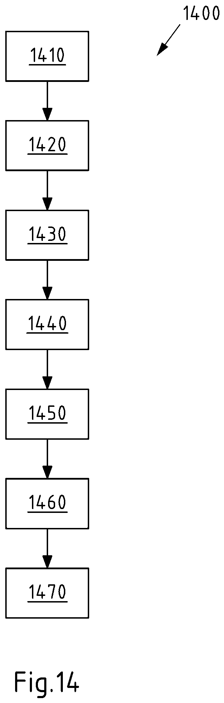

Turning now to FIG. 14, another example embodiment of a method according to the second exemplary aspect is shown in a flow chart. The method 1400 is performed by a UE.

Within action 1410, UE receives configuration information from a radio access node and, according to the configuration information, is configured with non-event-based and event-based CSI reporting, and related configurations.

Within action 1420, UE determines that an event has occurred which triggers event-based CSI reporting. In this non-limiting example, UE determines that a channel quality has dropped below a threshold.

Within action 1430, UE transmits PUCCH to request uplink resources for event-based CSI reporting.

Within action 1440, UE receives UL grant for PUSCH to transmit event-based CSI.

Within action 1450, UE determines that it has also non-event-based CSI to transmit along with the event-based CSI (ECSI). Furthermore, UE determines that in this non-limiting example, DMRS is transmitted in three symbols in the section of the resource grid relevant for the CSI and ECSI transmission.

Within action 1460, UE allocates resource elements for non-event-based CSI and ECSI. In this example embodiment, ECSI is allocated essentially evenly in two OFDM symbols respectively adjacent to the first and second additional DMRS symbol, i.e. adjacent to the second and third OFDM symbol in which DMRS is transmitted.

Within action 1470, UE transmits PUSCH carrying both the non-event-based CSI and the ECSI.

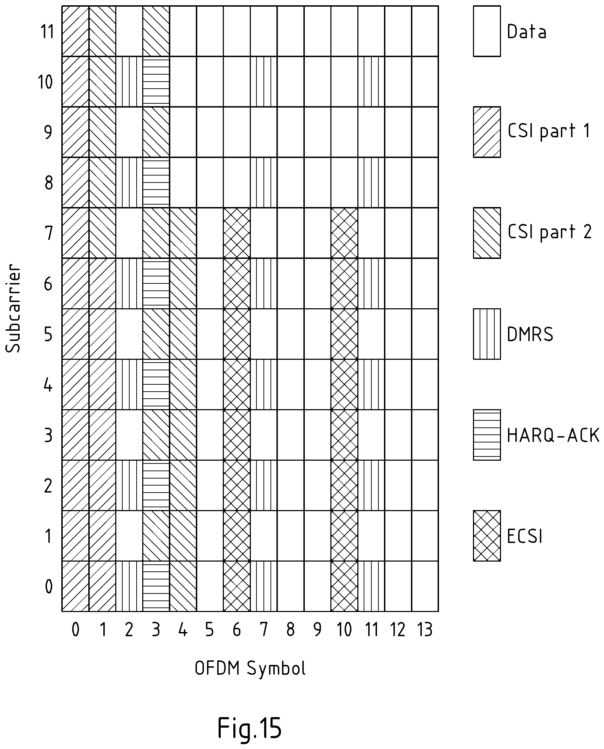

Turning now to FIG. 15, a schematic illustration of a section of a resource grid is shown with an exemplary resource allocation resulting from action 1460 in FIG. 14. Again, the section of the resource grid is spanned by 14 consecutive OFDM symbols and 12 consecutive subcarriers, and an order of the RE_{i,j} can be defined as explained in the context of FIG. 3. In the example of FIG. 15, ECSI is allocated in two OFDM symbols with indices 6 and 10 respectively adjacent to the first and second additional DMRS symbols with indices 7 and 11. In other words, the first OFDM symbol with index 6, which comprises ECSI REs, is adjacent to the first additional DMRS symbol with index 7, and the second OFDM symbol with index 10, which comprises ECSI REs, is adjacent to the second additional DMRS symbol with index 11. Furthermore, as shown in FIG. 15, the number of ECSI REs in OFDM symbol 6 and the number of ECSI REs in OFDM symbol 10 differ by an absolute value of one at maximum, in this particular non-limiting example even by a value of zero, i.e. the ECSI REs are allocated essentially evenly adjacent the first additional DMRS symbol with index 7 on the one hand and adjacent the second additional DMRS symbol with index 11 on the other hand.

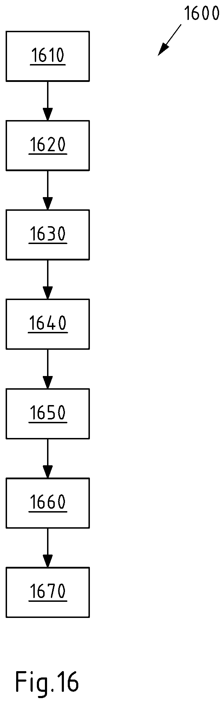

Turning now to FIG. 16, another example embodiment of a method according to the second exemplary aspect is shown in a flow chart. The method 1600 is performed by a UE.

Within action 1610, UE receives configuration information from a radio access node and, according to the configuration information, is configured with non-event-based and event-based CSI reporting, and related configurations.

Within action 1620, UE determines that an event has occurred which triggers event-based CSI reporting. In this non-limiting example, UE determines that a channel quality has dropped below a threshold.

Within action 1630, UE transmits PUCCH to request uplink resources for event-based CSI reporting.

Within action 1640, UE receives UL grant for PUSCH to transmit event-based CSI.

Within action 1650, UE determines that it has also non-event-based CSI to transmit along with the event-based CSI (ECSI). Furthermore, UE determines that in this non-limiting example, DMRS is transmitted in three symbols in the section of the resource grid relevant for the CSI and ECSI transmission.

Within action 1660, UE allocates resource elements for non-event-based CSI and ECSI. In this example embodiment, CSI part 2 is allocated around the first additional DMRS symbol, i.e. around the second OFDM symbol in which DMRS is transmitted.

Within action 1670, UE transmits PUSCH carrying both the non-event-based CSI and the ECSI.

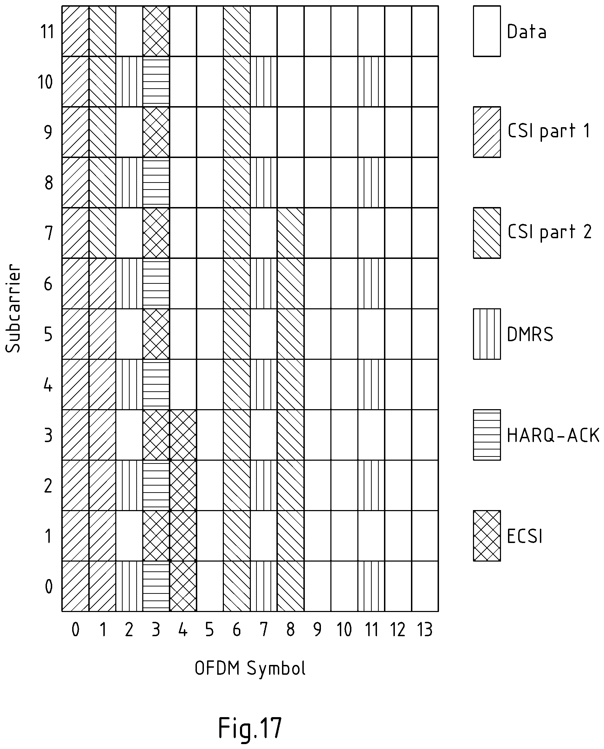

Turning now to FIG. 17, a schematic illustration of a section of a resource grid is shown with an exemplary resource allocation resulting from action 1660 in FIG. 16. Again, the section of the resource grid is spanned by 14 consecutive OFDM symbols and 12 consecutive subcarriers, and an order of the RE_{i,j} can be defined as explained in the context of FIG. 3. In the example of FIG. 17, the CSI part 2 in OFDM symbols with indices 6 and 8 is allocated around the first additional DMRS symbol with index 7, i.e. the CSI part 2 in OFDM symbols with indices 6 and 8 is adjacent, to the left and right, to the first additional DMRS symbol with index 7. Furthermore, as shown in FIG. 17, the ECSI REs in OFDM symbols with indices 3 and 4 replace CSI part 2 symbols compared to a scenario in which no ECSI is present.

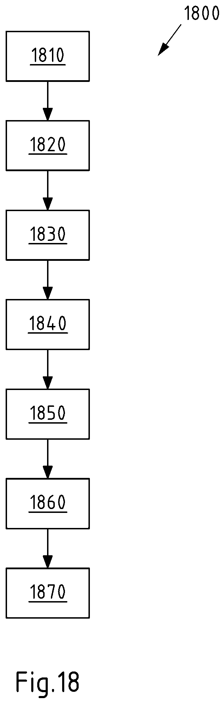

Turning now to FIG. 18, another example embodiment of a method according to the second exemplary aspect is shown in a flow chart. The method 1800 is performed by a UE.

Within action 1810, UE receives configuration information from a radio access node and, according to the configuration information, is configured with non-event-based and event-based CSI reporting, and related configurations.

Within action 1820, UE determines that an event has occurred which triggers event-based CSI reporting. In this non-limiting example, UE determines that a channel quality has dropped below a threshold.

Within action 1830, UE transmits PUCCH to request uplink resources for event-based CSI reporting.

Within action 1840, UE receives UL grant for PUSCH to transmit event-based CSI.

Within action 1850, UE determines that it has also non-event-based CSI to transmit along with the event-based CSI (ECSI). Furthermore, UE determines that in this non-limiting example, DMRS is transmitted in three symbols in the section of the resource grid relevant for the CSI and ECSI transmission.

Within action 1860, UE allocates resource elements for non-event-based CSI and ECSI. In this example embodiment, CSI part 2 is allocated essentially evenly in two OFDM symbols respectively adjacent to the first and second additional DMRS symbol, i.e. adjacent to the second and third OFDM symbol in which DMRS is transmitted.

Within action 1870, UE transmits PUSCH carrying both the non-event-based CSI and the ECSI.

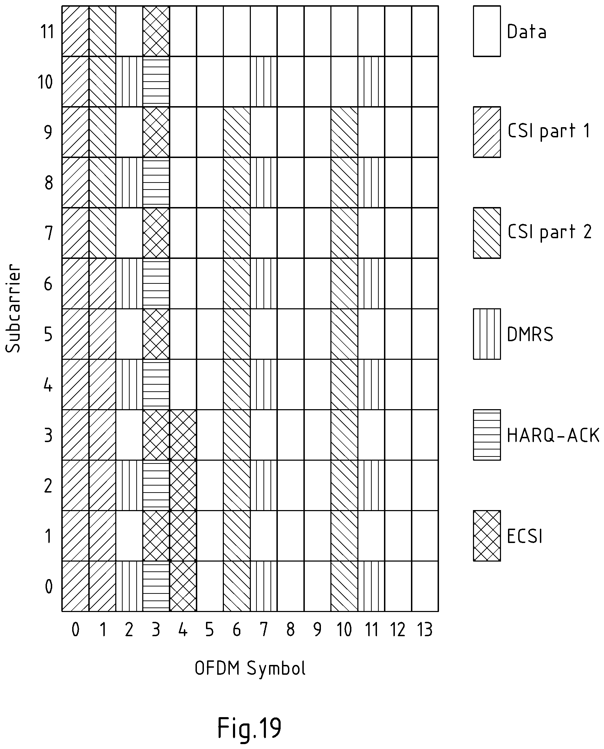

Turning now to FIG. 19, a schematic illustration of a section of a resource grid is shown with an exemplary resource allocation resulting from action 1860 in FIG. 18. Again, the section of the resource grid is spanned by 14 consecutive OFDM symbols and 12 consecutive subcarriers, and an order of the RE_{i,j} can be defined as explained in the context of FIG. 3. In the example of FIG. 19, CSI part 2 is allocated in two OFDM symbols with indices 6 and 10 respectively adjacent to the first and second additional DMRS symbols with indices 7 and 11. In other words, the first OFDM symbol with index 6, which comprises CSI part 2 REs, is adjacent to the first additional DMRS symbol with index 7, and the second OFDM symbol with index 10, which comprises CSI part 2 REs, is adjacent to the second additional DMRS symbol with index 11. Furthermore, as shown in FIG. 19, the number of CSI part 2 REs in OFDM symbol 6 and the number of CSI part 2 REs in OFDM symbol 10 differ by an absolute value of one at maximum, in this particular non-limiting example even by a value of zero, i.e. the CSI part 2 REs are allocated essentially evenly adjacent the first additional DMRS symbol with index 7 on the one hand and adjacent the second additional DMRS symbol with index 11 on the other hand. Furthermore, as shown in FIG. 19, the ECSI REs in OFDM symbols with indices 3 and 4 replace CSI part 2 symbols compared to a scenario in which no ECSI is present.

In an example embodiment not shown in the figures, UE may proceed as explained in the context of FIG. 18. Within an action corresponding to action 1860 of FIG. 18, however, UE may allocate ECSI and CSI part 2 in an interleaved manner. In this embodiment, RE allocation may, as an example, be the same as in FIG. 7, except that OFDM symbols with index 7 and 11 contain DMRS in subcarriers with index 0, 2, 4, 6, 8 and 10.

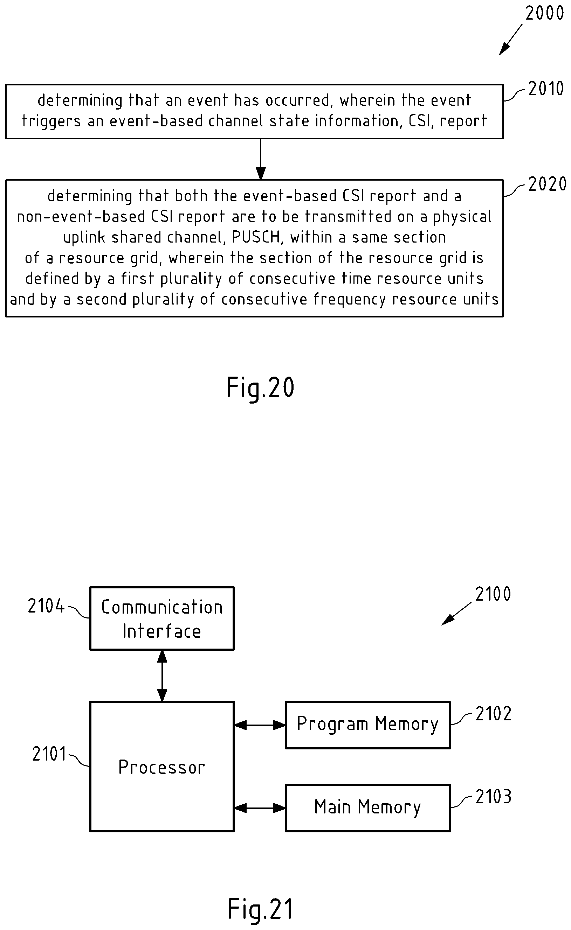

Turning now to FIG. 20, an example embodiment of a method according to the third exemplary aspect is shown in a flow chart. The method 2000 is performed by a UE.

Within action 2010, it is determined that an event has occurred, wherein the event triggers an event-based CSI report.

Within action 2020, it is determined that both the event-based CSI report and a non-event-based CSI report are to be transmitted on a PUSCH within a same section of a resource grid, wherein the section of the resource grid is defined by a first plurality of consecutive time resource units and by a second plurality of consecutive frequency resource units.

The example embodiment of the method shown in FIG. 20 may comprise further steps, in particular a step of allocating at least one resource element of the section of the resource grid to the event-based CSI report. In this case, the allocation of resource elements may correspond to the allocations shown in FIG. 3, 5, 7, 13, 15, 17, and 19. Furthermore, the example embodiments of methods shown in FIG. 1, 2, 4, 6, 8, 9, 10, 11, 12, 14, 16, and 18 may then also be considered as example embodiments of a method according to the third aspect.

FIG. 21 is a block diagram of an example embodiment of a user equipment 2100 according to any aspect of the present disclosure. For instance, UE 2100 may be configured for performing actions of one or more of the embodiments of the methods according to the present disclosure, such as the embodiments of a method explained in the context of FIG. 1, FIG. 8 and FIG. 20.

UE 2100 comprises a processor 2101. Processor 2101 may represent a single processor or two or more processors, which are for instance at least partially coupled, for instance via a bus. Processor 2101 executes instructions stored in program memory 2102 (for instance instructions causing UE 2100 to perform alone and/or together with a radio access node, one or more of the embodiments of the methods according to the present disclosure or parts thereof, when executed on processor 2101), and interfaces with a main memory 2103.

Program memory 2102 may also comprise an operating system for processor 2101. Some or all of memories 2102 and 2103 may also be included into processor 2101. Program memory 2102 and main memory 2103 may be formed by a single memory.

Moreover, processor 2101 may control a communication interface 2104 which is for example configured to communicate according to a communication system like a 3GPP communication system. Communication interface 2104 of UE 2100 may be realized by one or more network interfaces for instance.

The components 2102, 2103 and 2104 of UE 2100 may for instance be connected with processor 2101 by means of one or more serial and/or parallel busses.

It is to be understood that UE 2100 may comprise various other components.

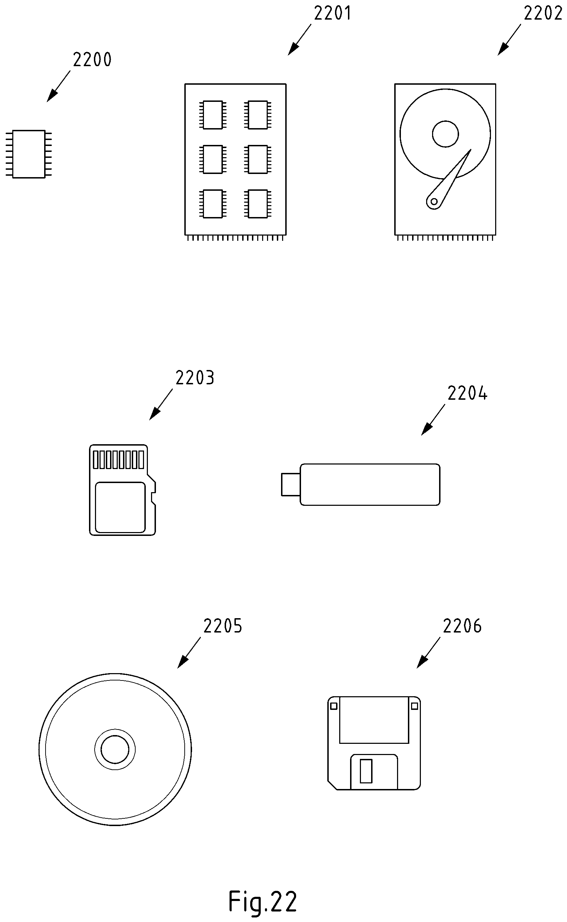

FIG. 22 is a schematic illustration of examples of tangible and non-transitory computer-readable storage media according to any aspect of the present disclosure that may for instance be used to implement memory 2102 of FIG. 21. To this end, FIG. 22 displays a flash memory 2200, which may for instance be soldered or bonded to a printed circuit board, a solid-state drive 2201 comprising a plurality of memory chips (e.g. Flash memory chips), a magnetic hard drive 2202, a Secure Digital (SD) card 2203, a Universal Serial Bus (USB) memory stick 2204, an optical storage medium 2205 (such as for instance a CD-ROM or DVD) and a magnetic storage medium 2206.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry);
(b) combinations of circuits and software (and/or firmware), such as:
   (i) a combination of processor(s), or
   (ii) sections of processor(s)/software (including digital signal processor(s)), software, and memory(ies) that work together to cause an apparatus, such as a mobile phone, to perform various functions); and
(c) circuits, such as a microprocessor(s) or a section of a microprocessor(s), that require software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processor 2101 of FIG. 21, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g. disk, memory, or the like) to be executed by such a processor. References to `computer-readable storage medium' should be understood to encompass specialized circuits such as FPGAs, ASICs, signal processing devices, and other devices.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. For example, the expression "at least one element", and then the referring to this expression by "the at least one element" is not to be understood to refer to one specific element of the "at least one element", but by "the at least one element" it is referred to "any of the at least one element" that are comprised by such one or more elements.

The wording "A, or B, or C, or a combination thereof' or "at least one of A, B and C" may be understood to be not exhaustive and to include at least the following: (i) A, or (ii) B, or (iii) C, or (iv) A and B, or (v) A and C, or (vi) B and C, or (vii) A and B and C.

It will be understood that the embodiments disclosed herein are only exemplary, and that any feature presented for a particular exemplary embodiment may be used with any aspect of the present disclosure on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

The following embodiments are also disclosed:
1. A user equipment comprising at least one processor and at least one memory, the at least one memory storing instructions that, when executed by the at least one processor, cause the user equipment to perform at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - allocating at least one resource element of the section of the resource grid to the event-based CSI report.
2. The user equipment according to embodiment 1, the at least one memory further storing instructions that, when executed by the at least one processor, cause the user equipment to perform at least one of the following:
   - allocating at least one resource element of the section of the resource grid to a first part of the non-event-based CSI report;
   - allocating at least one resource element of the section of the resource grid to a second part of the non-event-based CSI report.
3. The user equipment according to embodiment 1, wherein allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
4. The user equipment according to embodiment 1, wherein allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
5. The user equipment according to embodiment 1, wherein allocating the at least one resource element is performed such that the at least one resource element allocated to the event-based CSI report at least partially precedes, with respect to an order of resource elements of the section of the resource grid, at least one resource element allocated to the second part of the non-event-based CSI report.
6. The user equipment according to embodiment 1, wherein allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
7. The user equipment according to embodiment 2, wherein allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
8. The user equipment according to embodiment 2, wherein allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
9. The user equipment according to embodiment 1, the at least one memory further storing instructions that, when executed by the at least one processor, cause the user equipment to perform the following:
   - transmitting the event-based CSI report together with the non-event-based CSI report on the PUSCH.
10. A method performed by a user equipment, the method comprising at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - allocating at least one resource element of the section of the resource grid to the event-based CSI report.
11. The method according to embodiment 10, further comprising at least one of the following:
   - allocating at least one resource element of the section of the resource grid to a first part of the non-event-based CSI report;
   - allocating at least one resource element of the section of the resource grid to a second part of the non-event-based CSI report.
12. The method according to embodiment 10, wherein allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
13. The method according to embodiment 10, wherein allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
14. The method according to embodiment 10, wherein allocating the at least one resource element is performed such that the at least one resource element allocated to the event-based CSI report at least partially precedes, with respect to an order of resource elements of the section of the resource grid, at least one resource element allocated to the second part of the non-event-based CSI report.
15. The method according to embodiment 10, wherein allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
16. The method according to embodiment 11, wherein allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
17. The method according to embodiment 11, wherein allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
18. The method according to embodiment 10, further comprising the following:
   - transmitting the event-based CSI report together with the non-event-based CSI report on the PUSCH.
19. An apparatus comprising means for performing at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - allocating at least one resource element of the section of the resource grid to the event-based CSI report.
20. The apparatus according to embodiment 19, further comprising means for performing at least one of the following:
   - allocating at least one resource element of the section of the resource grid to a first part of the non-event-based CSI report;
   - allocating at least one resource element of the section of the resource grid to a second part of the non-event-based CSI report.
21. The apparatus according to embodiment 19, wherein allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
22. The apparatus according to embodiment 19, wherein allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
23. The apparatus according to embodiment 19, wherein allocating the at least one resource element is performed such that the at least one resource element allocated to the event-based CSI report at least partially precedes, with respect to an order of resource elements of the section of the resource grid, at least one resource element allocated to the second part of the non-event-based CSI report.
24. The apparatus according to embodiment 19, wherein allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
25. The apparatus according to embodiment 20, wherein allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
26. The apparatus according to embodiment 20, wherein allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
27. The apparatus according to embodiment 19, further comprising means for performing the following:
   - transmitting the event-based CSI report together with the non-event-based CSI report on the PUSCH.
28. A non-transitory computer-readable medium comprising program instructions which, when executed by a user equipment, cause the user equipment to perform at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - allocating at least one resource element of the section of the resource grid to the event-based CSI report.
29. The non-transitory computer-readable medium according to embodiment 28, further comprising program instructions which, when executed by a user equipment, cause the user equipment to perform at least one of the following:
   - allocating at least one resource element of the section of the resource grid to a first part of the non-event-based CSI report;
   - allocating at least one resource element of the section of the resource grid to a second part of the non-event-based CSI report.
30. The non-transitory computer-readable medium according to embodiment 28, wherein allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
31. The non-transitory computer-readable medium according to embodiment 28, wherein allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
32. The non-transitory computer-readable medium according to embodiment 28, wherein allocating the at least one resource element is performed such that the at least one resource element allocated to the event-based CSI report at least partially precedes, with respect to an order of resource elements of the section of the resource grid, at least one resource element allocated to the second part of the non-event-based CSI report.
33. The non-transitory computer-readable medium according to embodiment 28, wherein allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
34. The non-transitory computer-readable medium according to embodiment 29, wherein allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
35. The non-transitory computer-readable medium according to embodiment 29, wherein allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
36. The non-transitory computer-readable medium according to embodiment 28, further comprising program instructions which, when executed by a user equipment, cause the user equipment to perform the following:
   - transmitting the event-based CSI report together with the non-event-based CSI report on the PUSCH.
37. A computer program comprising instructions which, when executed by a user equipment, cause the user equipment to perform at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - allocating at least one resource element of the section of the resource grid to the event-based CSI report.
38. The computer program according to embodiment 37, further comprising instructions which, when executed by a user equipment, cause the user equipment to perform at least one of the following:
   - allocating at least one resource element of the section of the resource grid to a first part of the non-event-based CSI report;
   - allocating at least one resource element of the section of the resource grid to a second part of the non-event-based CSI report.
39. The computer program according to embodiment 37, wherein allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
40. The computer program according to embodiment 37, wherein allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
41. The computer program according to embodiment 37, wherein allocating the at least one resource element is performed such that the at least one resource element allocated to the event-based CSI report at least partially precedes, with respect to an order of resource elements of the section of the resource grid, at least one resource element allocated to the second part of the non-event-based CSI report.
42. The computer program according to embodiment 37, wherein allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
43. The computer program according to embodiment 38, wherein allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
44. The computer program according to embodiment 38, wherein allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
45. The computer program according to embodiment 37, further comprising instructions which, when executed by a user equipment, cause the user equipment to perform the following:
   - transmitting the event-based CSI report together with the non-event-based CSI report on the PUSCH.
46. A user equipment comprising at least one processor and at least one memory, the at least one memory storing instructions that, when executed by the at least one processor, cause the user equipment to perform at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - determining a number of time resource units in which a demodulation reference signal, DMRS, is transmitted within the section of the resource grid;
   - allocating, based on the number of time resource units in which a DMRS is transmitted, at least one resource element of the section of the resource grid to the event-based CSI report.
47. The user equipment according to embodiment 46, the at least one memory further storing instructions that, when executed by the at least one processor, cause the user equipment to perform at least one of the following:
   - allocating at least one resource element of the section of the resource grid to a first part of the non-event-based CSI report;
   - allocating, based on the number of time resource units in which a DMRS is transmitted, at least one resource element of the section of the resource grid to a second part of the non-event-based CSI report.
48. The user equipment according embodiment 46, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
49. The user equipment according to embodiment 46, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
50. The user equipment according to embodiment 46, wherein in response to determining that the number of time resource units in which a DMRS is transmitted is equal to one, allocating the at least one resource element is performed such that the at least one resource element allocated to the event-based CSI report at least partially precedes, with respect to an order of resource elements of the section of the resource grid, at least one resource element allocated to the second part of the non-event-based CSI report.
51. The user equipment according to embodiment 46, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
52. The user equipment according to embodiment 47, wherein in response to determining that the number of time resource units in which a DMRS is transmitted is equal to one, allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
53. The user equipment according to embodiment 47, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
54. The user equipment according to embodiment 46, wherein in response to determining that the number of time resource units in which a DMRS is transmitted is larger than one, allocating the at least one resource element is performed such that at least one time resource unit, which comprises at least one resource element allocated to the event-based CSI report, is adjacent to a first additional time resource unit in which a DMRS is transmitted.
55. The user equipment according to embodiment 46, wherein in response to determining that the number of time resource units in which a DMRS is transmitted is larger than two, allocating the at least one resource element is performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted.
56. The user equipment according to embodiment 46, wherein in response to determining that the number of time resource units in which a DMRS is transmitted is larger than one, allocating the at least one resource element is performed such that the at least one resource element allocated to the event-based CSI report at least partially displaces at least one resource element allocated to the second part of the non-event-based CSI report.
57. The user equipment according to embodiment 47, wherein in response to determining that the number of time resource units in which a DMRS is transmitted is larger than one, allocating the at least one resource element is performed such that at least one time resource unit, which comprises at least one resource element allocated to the second part of the non-event-based CSI report, is adjacent to a first additional time resource unit in which a DMRS is transmitted.
58. The user equipment according to embodiment 47, wherein in response to determining that the number of time resource units in which a DMRS is transmitted is larger than two, allocating the at least one resource element is performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted.
59. The user equipment according to embodiment 47, wherein in response to determining that the number of time resource units in which a DMRS is transmitted is larger than one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
60. The user equipment according to embodiment 46, the at least one memory further storing instructions that, when executed by the at least one processor, cause the user equipment to perform at least one of the following:
   - transmitting the event-based CSI report together with the non-event-based CSI report on the PUSCH.
61. A method performed by a user equipment, the method comprising at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - determining a number of time resource units in which a demodulation reference signal, DMRS, is transmitted within the section of the resource grid;
   - allocating, based on the number of time resource units in which a DMRS is transmitted, at least one resource element of the section of the resource grid to the event-based CSI report.
62. The method according to embodiment 61, further comprising at least one of the following:
   - allocating at least one resource element of the section of the resource grid to a first part of the non-event-based CSI report;
   - allocating, based on the number of time resource units in which a DMRS is transmitted, at least one resource element of the section of the resource grid to a second part of the non-event-based CSI report.
63. The method according embodiment 61, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
64. The method according to embodiment 61, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
65. The method according to embodiment 61, wherein in response to determining that the number of time resource units in which a DMRS is transmitted is equal to one, allocating the at least one resource element is performed such that the at least one resource element allocated to the event-based CSI report at least partially precedes, with respect to an order of resource elements of the section of the resource grid, at least one resource element allocated to the second part of the non-event-based CSI report.
66. The method according to embodiment 61, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
67. The method according to embodiment 62, wherein in response to determining that the number of time resource units in which a DMRS is transmitted is equal to one, allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
68. The method according to embodiment 62, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
69. The method according to embodiment 61, wherein in response to determining that the number of time resource units in which a DMRS is transmitted is larger than one, allocating the at least one resource element is performed such that at least one time resource unit, which comprises at least one resource element allocated to the event-based CSI report, is adjacent to a first additional time resource unit in which a DMRS is transmitted.
70. The method according to embodiment 61, wherein in response to determining that the number of time resource units in which a DMRS is transmitted is larger than two, allocating the at least one resource element is performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted.
71. The method according to embodiment 61, wherein in response to determining that the number of time resource units in which a DMRS is transmitted is larger than one, allocating the at least one resource element is performed such that the at least one resource element allocated to the event-based CSI report at least partially displaces at least one resource element allocated to the second part of the non-event-based CSI report.
72. The method according to embodiment 62, wherein in response to determining that the number of time resource units in which a DMRS is transmitted is larger than one, allocating the at least one resource element is performed such that at least one time resource unit, which comprises at least one resource element allocated to the second part of the non-event-based CSI report, is adjacent to a first additional time resource unit in which a DMRS is transmitted.
73. The method according to embodiment 62, wherein in response to determining that the number of time resource units in which a DMRS is transmitted is larger than two, allocating the at least one resource element is performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted.
74. The method according to embodiment 62, wherein in response to determining that the number of time resource units in which a DMRS is transmitted is larger than one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
75. The method according to embodiment 61, further comprising the following:
   - transmitting the event-based CSI report together with the non-event-based CSI report on the PUSCH.
76. An apparatus comprising means for performing at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - determining a number of time resource units in which a demodulation reference signal, DMRS, is transmitted within the section of the resource grid;
   - allocating, based on the number of time resource units in which a DMRS is transmitted, at least one resource element of the section of the resource grid to the event-based CSI report.
77. The apparatus according to embodiment 76, further comprising means for performing at least one of the following:
   - allocating at least one resource element of the section of the resource grid to a first part of the non-event-based CSI report;
   - allocating, based on the number of time resource units in which a DMRS is transmitted, at least one resource element of the section of the resource grid to a second part of the non-event-based CSI report.
78. The apparatus according embodiment 76, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
79. The apparatus according to embodiment 76, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
80. The apparatus according to embodiment 76, wherein in response to determining that the number of time resource units in which a DMRS is transmitted is equal to one, allocating the at least one resource element is performed such that the at least one resource element allocated to the event-based CSI report at least partially precedes, with respect to an order of resource elements of the section of the resource grid, at least one resource element allocated to the second part of the non-event-based CSI report.
81. The apparatus according to embodiment 76, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
82. The apparatus according to embodiment 77, wherein in response to determining that the number of time resource units in which a DMRS is transmitted is equal to one, allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
83. The apparatus according to embodiment 77, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
84. The apparatus according to embodiment 76, wherein in response to determining that the number of time resource units in which a DMRS is transmitted is larger than one, allocating the at least one resource element is performed such that at least one time resource unit, which comprises at least one resource element allocated to the event-based CSI report, is adjacent to a first additional time resource unit in which a DMRS is transmitted.
85. The apparatus according to embodiment 76, wherein in response to determining that the number of time resource units in which a DMRS is transmitted is larger than two, allocating the at least one resource element is performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted.
86. The apparatus according to embodiment 76, wherein in response to determining that the number of time resource units in which a DMRS is transmitted is larger than one, allocating the at least one resource element is performed such that the at least one resource element allocated to the event-based CSI report at least partially displaces at least one resource element allocated to the second part of the non-event-based CSI report.
87. The apparatus according to embodiment 77, wherein in response to determining that the number of time resource units in which a DMRS is transmitted is larger than one, allocating the at least one resource element is performed such that at least one time resource unit, which comprises at least one resource element allocated to the second part of the non-event-based CSI report, is adjacent to a first additional time resource unit in which a DMRS is transmitted.
88. The apparatus according to embodiment 77, wherein in response to determining that the number of time resource units in which a DMRS is transmitted is larger than two, allocating the at least one resource element is performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted.
89. The apparatus according to embodiment 77, wherein in response to determining that the number of time resource units in which a DMRS is transmitted is larger than one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
90. The apparatus according to embodiment 76, further comprising means for performing the following:
   - transmitting the event-based CSI report together with the non-event-based CSI report on the PUSCH.
91. A non-transitory computer-readable medium comprising program instructions which, when executed by a user equipment, cause the user equipment to perform at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - determining a number of time resource units in which a demodulation reference signal, DMRS, is transmitted within the section of the resource grid;
   - allocating, based on the number of time resource units in which a DMRS is transmitted, at least one resource element of the section of the resource grid to the event-based CSI report.
92. The non-transitory computer-readable medium according to embodiment 91, further comprising program instructions which, when executed by a user equipment, cause the user equipment to perform at least one of the following:
   - allocating at least one resource element of the section of the resource grid to a first part of the non-event-based CSI report;
   - allocating, based on the number of time resource units in which a DMRS is transmitted, at least one resource element of the section of the resource grid to a second part of the non-event-based CSI report.
93. The non-transitory computer-readable medium according to embodiment 91, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
94. The non-transitory computer-readable medium according to embodiment 91, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
95. The non-transitory computer-readable medium according to embodiment 91, wherein in response to determining that the number of time resource units in which a DMRS is transmitted is equal to one, allocating the at least one resource element is performed such that the at least one resource element allocated to the event-based CSI report at least partially precedes, with respect to an order of resource elements of the section of the resource grid, at least one resource element allocated to the second part of the non-event-based CSI report.
96. The non-transitory computer-readable medium according to embodiment 91, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
97. The non-transitory computer-readable medium according to embodiment 92, wherein in response to determining that the number of time resource units in which a DMRS is transmitted is equal to one, allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
98. The non-transitory computer-readable medium according to embodiment 92, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
99. The non-transitory computer-readable medium according to embodiment 91, wherein in response to determining that the number of time resource units in which a DMRS is transmitted is larger than one, allocating the at least one resource element is performed such that at least one time resource unit, which comprises at least one resource element allocated to the event-based CSI report, is adjacent to a first additional time resource unit in which a DMRS is transmitted.
100. The non-transitory computer-readable medium according to embodiment 91, wherein in response to determining that the number of time resource units in which a DMRS is transmitted is larger than two, allocating the at least one resource element is performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted.
101. The non-transitory computer-readable medium according to embodiment 91, wherein in response to determining that the number of time resource units in which a DMRS is transmitted is larger than one, allocating the at least one resource element is performed such that the at least one resource element allocated to the event-based CSI report at least partially displaces at least one resource element allocated to the second part of the non-event-based CSI report.
102. The non-transitory computer-readable medium according to embodiment 92, wherein in response to determining that the number of time resource units in which a DMRS is transmitted is larger than one, allocating the at least one resource element is performed such that at least one time resource unit, which comprises at least one resource element allocated to the second part of the non-event-based CSI report, is adjacent to a first additional time resource unit in which a DMRS is transmitted.
103. The non-transitory computer-readable medium according to embodiment 92, wherein in response to determining that the number of time resource units in which a DMRS is transmitted is larger than two, allocating the at least one resource element is performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted.
104. The non-transitory computer-readable medium according to embodiment 92, wherein in response to determining that the number of time resource units in which a DMRS is transmitted is larger than one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
105. The non-transitory computer-readable medium according to embodiment 91, further comprising program instructions which, when executed by a user equipment, cause the user equipment to perform the following:
   - transmitting the event-based CSI report together with the non-event-based CSI report on the PUSCH.
106. A computer program comprising instructions which, when executed by a user equipment, cause the user equipment to perform at least the following:
   - determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
   - determining a number of time resource units in which a demodulation reference signal, DMRS, is transmitted within the section of the resource grid;
   - allocating, based on the number of time resource units in which a DMRS is transmitted, at least one resource element of the section of the resource grid to the event-based CSI report.
107. The computer program according to embodiment 106, further comprising instructions which, when executed by a user equipment, cause the user equipment to perform at least one of the following:
   - allocating at least one resource element of the section of the resource grid to a first part of the non-event-based CSI report;
   - allocating, based on the number of time resource units in which a DMRS is transmitted, at least one resource element of the section of the resource grid to a second part of the non-event-based CSI report.
108. The computer program according to embodiment 106, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the first part of the non-event-based CSI report.
109. The computer program according to embodiment 106, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.
110. The computer program according to embodiment 106, wherein in response to determining that the number of time resource units in which a DMRS is transmitted is equal to one, allocating the at least one resource element is performed such that the at least one resource element allocated to the event-based CSI report at least partially precedes, with respect to an order of resource elements of the section of the resource grid, at least one resource element allocated to the second part of the non-event-based CSI report.
111. The computer program according to embodiment 106, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the second part of the non-event-based CSI report.
112. The computer program according to embodiment 107, wherein in response to determining that the number of time resource units in which a DMRS is transmitted is equal to one, allocating the at least one resource element is performed such that the at least one resource element allocated to the second part of the non-event-based CSI report at least partially alternates, with respect to an order of resource elements of the section of the resource grid, with at least one resource element allocated to a HARQ transmission.
113. The computer program according to embodiment 107, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
114. The computer program according to embodiment 106, wherein in response to determining that the number of time resource units in which a DMRS is transmitted is larger than one, allocating the at least one resource element is performed such that at least one time resource unit, which comprises at least one resource element allocated to the event-based CSI report, is adjacent to a first additional time resource unit in which a DMRS is transmitted.
115. The computer program according to embodiment 106, wherein in response to determining that the number of time resource units in which a DMRS is transmitted is larger than two, allocating the at least one resource element is performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted.
116. The computer program according to embodiment 106, wherein in response to determining that the number of time resource units in which a DMRS is transmitted is larger than one, allocating the at least one resource element is performed such that the at least one resource element allocated to the event-based CSI report at least partially displaces at least one resource element allocated to the second part of the non-event-based CSI report.
117. The computer program according to embodiment 107, wherein in response to determining that the number of time resource units in which a DMRS is transmitted is larger than one, allocating the at least one resource element is performed such that at least one time resource unit, which comprises at least one resource element allocated to the second part of the non-event-based CSI report, is adjacent to a first additional time resource unit in which a DMRS is transmitted.
118. The computer program according to embodiment 107, wherein in response to determining that the number of time resource units in which a DMRS is transmitted is larger than two, allocating the at least one resource element is performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted.
119. The computer program according to embodiment 107, wherein in response to determining that the number of time resource units in which a DMRS is transmitted is larger than one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.
120. The computer program according to embodiment 106, further comprising instructions which, when executed by a user equipment, cause the user equipment to perform the following:
   - transmitting the event-based CSI report together with the non-event-based CSI report on the PUSCH.
121. A user equipment comprising at least one processor and at least one memory, the at least one memory storing instructions that, when executed by the at least one processor, cause the user equipment to perform at least the following:
   - determining that an event has occurred, wherein the event triggers an event-based channel state information, CSI, report;
   - determining that both the event-based CSI report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units.
122. The user equipment according to embodiment 121, the at least one memory further storing instructions that, when executed by the at least one processor, cause the user equipment to perform the following:
   - allocating at least one resource element of the section of the resource grid to the event-based CSI report.
123. The user equipment according to embodiment 122, the at least one memory further storing instructions that, when executed by the at least one processor, cause the user equipment to perform at least one of the following:
   - allocating at least one resource element of the section of the resource grid to a first part of the non-event-based CSI report;
   - allocating at least one resource element of the section of the resource grid to a second part of the non-event-based CSI report.
124. The user equipment according to embodiment 122, wherein allocating the at least one resource element of the section of the resource grid to the event-based CSI report is performed according to a fixed scheme.
125. The user equipment according to embodiment 122, the at least one memory further storing instructions that, when executed by the at least one processor, cause the user equipment to perform the following:
   - determining a number of time resource units in which a demodulation reference signal, DMRS, is transmitted within the section of the resource grid;
   wherein allocating the at least one resource element of the section of the resource grid to the event-based CSI report is based on the number of time resource units in which a DMRS is transmitted.
126. The user equipment according to embodiment 122, the at least one memory further storing instructions that, when executed by the at least one processor, cause the user equipment to perform the following:
   - transmitting the event-based CSI report together with the non-event-based CSI report on the PUSCH.
127. A method performed by a user equipment, the method comprising at least the following:
   - determining that an event has occurred, wherein the event triggers an event-based channel state information, CSI, report;
   - determining that both the event-based CSI report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units.
128. The method according to embodiment 127, further comprising the following:
   - allocating at least one resource element of the section of the resource grid to the event-based CSI report.
129. The method according to embodiment 128, further comprising at least one of the following:
   - allocating at least one resource element of the section of the resource grid to a first part of the non-event-based CSI report;
   - allocating at least one resource element of the section of the resource grid to a second part of the non-event-based CSI report.
130. The method according to embodiment 128, wherein allocating the at least one resource element of the section of the resource grid to the event-based CSI report is performed according to a fixed scheme.
131. The method according to embodiment 128, further comprising the following:
   - determining a number of time resource units in which a demodulation reference signal, DMRS, is transmitted within the section of the resource grid;
   wherein allocating the at least one resource element of the section of the resource grid to the event-based CSI report is based on the number of time resource units in which a DMRS is transmitted.
132. The method according to embodiment 128, further comprising the following:
   - transmitting the event-based CSI report together with the non-event-based CSI report on the PUSCH.
133. An apparatus comprising means for performing at least the following:
   - determining that an event has occurred, wherein the event triggers an event-based channel state information, CSI, report;
   - determining that both the event-based CSI report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units.
134. The apparatus according to embodiment 133, further comprising means for performing the following:
   - allocating at least one resource element of the section of the resource grid to the event-based CSI report.
135. The apparatus according to embodiment 134, further comprising means for performing at least one of the following:
   - allocating at least one resource element of the section of the resource grid to a first part of the non-event-based CSI report;
   - allocating at least one resource element of the section of the resource grid to a second part of the non-event-based CSI report.
136. The apparatus according to embodiment 134, wherein allocating the at least one resource element of the section of the resource grid to the event-based CSI report is performed according to a fixed scheme.
137. The apparatus according to embodiment 134, further comprising means for performing the following:
   - determining a number of time resource units in which a demodulation reference signal, DMRS, is transmitted within the section of the resource grid;
   wherein allocating the at least one resource element of the section of the resource grid to the event-based CSI report is based on the number of time resource units in which a DMRS is transmitted.
138. The apparatus according to embodiment 134, further comprising means for performing the following:
   - transmitting the event-based CSI report together with the non-event-based CSI report on the PUSCH.
139. A non-transitory computer-readable medium comprising program instructions which, when executed by a user equipment, cause the user equipment to perform at least the following:
   - determining that an event has occurred, wherein the event triggers an event-based channel state information, CSI, report;
   - determining that both the event-based CSI report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units.
140. The non-transitory computer-readable medium according to embodiment 139, further comprising program instructions which, when executed by a user equipment, cause the user equipment to perform the following:
   - allocating at least one resource element of the section of the resource grid to the event-based CSI report.
141. The non-transitory computer-readable medium according to embodiment 140, further comprising program instructions which, when executed by a user equipment, cause the user equipment to perform at least one of the following:
   - allocating at least one resource element of the section of the resource grid to a first part of the non-event-based CSI report;
   - allocating at least one resource element of the section of the resource grid to a second part of the non-event-based CSI report.
142. The non-transitory computer-readable medium according to embodiment 140, wherein allocating the at least one resource element of the section of the resource grid to the event-based CSI report is performed according to a fixed scheme.
143. The non-transitory computer-readable medium according to embodiment 140, further comprising program instructions which, when executed by a user equipment, cause the user equipment to perform the following:
   - determining a number of time resource units in which a demodulation reference signal, DMRS, is transmitted within the section of the resource grid;
   wherein allocating the at least one resource element of the section of the resource grid to the event-based CSI report is based on the number of time resource units in which a DMRS is transmitted.
144. The non-transitory computer-readable medium according to embodiment 140, further comprising program instructions which, when executed by a user equipment, cause the user equipment to perform the following:
   - transmitting the event-based CSI report together with the non-event-based CSI report on the PUSCH.
145. A computer program comprising instructions which, when executed by a user equipment, cause the user equipment to perform at least the following:
   - determining that an event has occurred, wherein the event triggers an event-based channel state information, CSI, report;
   - determining that both the event-based CSI report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units.
146. The computer program according to embodiment 145, further comprising instructions which, when executed by a user equipment, cause the user equipment to perform the following:
   - allocating at least one resource element of the section of the resource grid to the event-based CSI report.
147. The computer program according to embodiment 146, further comprising instructions which, when executed by a user equipment, cause the user equipment to perform at least one of the following:
   - allocating at least one resource element of the section of the resource grid to a first part of the non-event-based CSI report;
   - allocating at least one resource element of the section of the resource grid to a second part of the non-event-based CSI report.
148. The computer program according to embodiment 146, wherein allocating the at least one resource element of the section of the resource grid to the event-based CSI report is performed according to a fixed scheme.
149. The computer program according to embodiment 146, further comprising instructions which, when executed by a user equipment, cause the user equipment to perform the following:
   - determining a number of time resource units in which a demodulation reference signal, DMRS, is transmitted within the section of the resource grid;
   wherein allocating the at least one resource element of the section of the resource grid to the event-based CSI report is based on the number of time resource units in which a DMRS is transmitted.
150. The computer program according to embodiment 146, further comprising instructions which, when executed by a user equipment, cause the user equipment to perform the following:
   - transmitting the event-based CSI report together with the non-event-based CSI report on the PUSCH.

### ABBREVIATIONS

- 3GPP: 3rd Generation Partnership Project
- BS: base station
- CSI: Channel State Information
- DCI: Downlink Control Information
- DMRS: Demodulation Reference Signal
- ECSI: Event-Based CSI
- gNB: gNodeB
- L1: Physical Layer
- OFDM: Orthogonal Frequency-Division Multiplexing
- NR: New Radio
- PUCCH: Physical Uplink Control Channel
- PUSCH: Physical Uplink Shared Channel
- RAN: Radio Access Network
- RE: Resource Element
- RSRP: Reference Signal Received Power
- UCI: Uplink Control Information
- UE: User Equipment
- UL: Uplink

## Claims

1. A user equipment comprising means for performing at least the following:
- determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
- determining a number of time resource units in which a demodulation reference signal, DMRS, is transmitted within the section of the resource grid;
- allocating, based on the number of time resource units in which a DMRS is transmitted, at least one resource element of the section of the resource grid to the event-based CSI report.

2. The user equipment according to claim 1, further comprising means for performing at least one of the following:
- allocating at least one resource element of the section of the resource grid to a first part of the non-event-based CSI report;
- allocating, based on the number of time resource units in which a DMRS is transmitted, at least one resource element of the section of the resource grid to a second part of the non-event-based CSI report.

3. The user equipment according to claim 1, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with at least one resource element allocated to a hybrid automatic repeat request, HARQ, transmission.

4. The user equipment according to claim 1, wherein in response to determining that the number of time resource units in which a DMRS is transmitted is equal to one, allocating the at least one resource element is performed such that the at least one resource element allocated to the event-based CSI report at least partially precedes, with respect to an order of resource elements of the section of the resource grid, at least one resource element allocated to the second part of the non-event-based CSI report.

5. The user equipment according to claim 1, wherein in response to determining that the number of time resource units in which a DMRS is transmitted is equal to one, allocating the at least one resource element is performed such that the at least one resource element allocated to the event-based CSI report at least partially succeeds, with respect to an order of resource elements of the section of the resource grid, at least one resource element allocated to the second part of the non-event-based CSI report.

6. The user equipment according to claim 2, wherein in response to determining that the number of time resource units in which a DMRS is transmitted is equal to one, allocating the at least one resource element is performed such that the at least one resource element allocated to the second part of the non-event-based CSI report at least partially alternates, with respect to an order of resource elements of the section of the resource grid, with at least one resource element allocated to a HARQ transmission.

7. The user equipment according to claim 2, wherein in response to determining that the number of time resource units in which a DMRS is transmitted is equal to one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.

8. The user equipment according to claim 1, wherein in response to determining that the number of time resource units in which a DMRS is transmitted is larger than one, allocating the at least one resource element is performed such that at least one time resource unit, which comprises at least one resource element allocated to the event-based CSI report, is adjacent to a first additional time resource unit in which a DMRS is transmitted.

9. The user equipment according to claim 1, wherein in response to determining that the number of time resource units in which a DMRS is transmitted is larger than two, allocating the at least one resource element is performed such that a first time resource unit, which comprises at least one resource element allocated to the event-based CSI report, is adjacent to a first additional time resource unit in which a DMRS is transmitted, and such that a second time resource unit, which comprises at least one resource element allocated to the event-based CSI report, is adjacent to a second additional time resource unit in which a DMRS is transmitted.

10. The user equipment according to claim 1, wherein in response to determining that the number of time resource units in which a DMRS is transmitted is larger than one, allocating the at least one resource element is performed such that the at least one resource element allocated to the event-based CSI report at least partially displaces at least one resource element allocated to the second part of the non-event-based CSI report.

11. The user equipment according to claim 2, wherein in response to determining that the number of time resource units in which a DMRS is transmitted is larger than one, allocating the at least one resource element is performed such that at least one time resource unit, which comprises at least one resource element allocated to the second part of the non-event-based CSI report, is adjacent to a first additional time resource unit in which a DMRS is transmitted.

12. The user equipment according to claim 2, wherein in response to determining that the number of time resource units in which a DMRS is transmitted is larger than two, allocating the at least one resource element is performed such that a first time resource unit, which comprises at least one resource element allocated to the second part of the non-event-based CSI report, is adjacent to a first additional time resource unit in which a DMRS is transmitted, and such that a second time resource unit, which comprises at least one resource element allocated to the second part of the non-event-based CSI report, is adjacent to a second additional time resource unit in which a DMRS is transmitted.

13. The user equipment according to claim 2, wherein in response to determining that the number of time resource units in which a DMRS is transmitted is larger than one, allocating the at least one resource element is performed such that the at least one resource element allocated to the event-based CSI report at least partially alternates, with respect to an order of resource elements of the section of the resource grid, with the at least one resource element allocated to the second part of the non-event-based CSI report.

14. The user equipment according to claim 1, further comprising means for performing the following:
- transmitting the event-based CSI report together with the non-event-based CSI report on the PUSCH.

15. A method performed by a user equipment, the method comprising at least the following:
- determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
- determining a number of time resource units in which a demodulation reference signal, DMRS, is transmitted within the section of the resource grid;
- allocating, based on the number of time resource units in which a DMRS is transmitted, at least one resource element of the section of the resource grid to the event-based CSI report.

16. A computer program comprising instructions which, when executed by a user equipment, cause the user equipment to perform at least the following:
- determining that both an event-based channel state information, CSI, report and a non-event-based CSI report are to be transmitted on a physical uplink shared channel, PUSCH, within a same section of a resource grid, wherein the section of the resource grid is defined by a first plurality of consecutive time resource units and by a second plurality of consecutive frequency resource units;
- determining a number of time resource units in which a demodulation reference signal, DMRS, is transmitted within the section of the resource grid;
- allocating, based on the number of time resource units in which a DMRS is transmitted, at least one resource element of the section of the resource grid to the event-based CSI report.
